(19) Europäisches Patentamt
European Patent Office
Office européen des brevets

(11) **EP 2 393 147 A1**

(12) **EUROPEAN PATENT APPLICATION**
published in accordance with Art. 153(4) EPC

(43) Date of publication:
**07.12.2011 Bulletin 2011/49**

(51) Int Cl.:
*H01M 4/02* (2006.01)  *H01M 4/66* (2006.01)

(21) Application number: **09839102.2**

(22) Date of filing: **02.06.2009**

(86) International application number:
**PCT/JP2009/002467**

(87) International publication number:
**WO 2010/086910 (05.08.2010 Gazette 2010/31)**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **02.02.2009 JP 2009021519**

(71) Applicant: **Panasonic Corporation
Kadoma-shi
Osaka 571-8501 (JP)**

(72) Inventors:
• **MURAOKA, Yoshiyuki
Osaka 540-6207 (JP)**
• **OKAMURA, Kazuhiro
Osaka 540-6207 (JP)**
• **UGAJI, Masaya
Osaka 540-6207 (JP)**

(74) Representative: **Grünecker, Kinkeldey,
Stockmair & Schwanhäusser
Leopoldstrasse 4
80802 München (DE)**

(54) **NONAQUEOUS ELECTROLYTE SECONDARY BATTERY AND MANUFACTURING METHOD THEREOF**

(57) A nonaqueous electrolyte secondary battery includes an electrode group (8) formed by winding a positive electrode (4) and a negative electrode (5) with a porous insulating layer (6) interposed therebetween. The positive electrode (4) includes a positive electrode material mixture layer (4B) and a positive electrode current collector (4A). The positive electrode material mixture layer (4B) has a porosity of 20% or lower. $\varepsilon \geq \eta/\rho$ is satisfied, where $\eta$ is the thickness of the positive electrode material mixture layer (4B) on a surface located inside in the radial direction of the electrode group (8) of surfaces of the positive electrode current collector (4A), $\rho$ is the minimum radius of curvature of the positive electrode (4), and $\varepsilon$ is a tensile extension in the winding direction of the positive electrode (4). The frequency distribution curve for the particle sizes of a positive electrode active material has two or more peaks.

FIG. 12

(a)     (b)

EP 2 393 147 A1

## Description

TECHNICAL FIELD

The present invention relates to nonaqueous electrolyte secondary batteries and methods for fabricating the nonaqueous electrolyte secondary batteries, and specifically relates to a high-capacity nonaqueous electrolyte secondary battery and a method for fabricating the high-capacity nonaqueous electrolyte secondary battery.

BACKGROUND ART

To meet recent demands for use on vehicles in consideration of environmental issues or for employing DC power supplies for large tools, small and lightweight secondary batteries capable of performing rapid charge and large-current discharge have been required. Examples of typical secondary batteries satisfying such demands include a nonaqueous electrolyte secondary battery.

The nonaqueous electrolyte secondary battery (hereinafter also simply referred to as a "battery") includes as a power-generating element, an electrode group in which a positive electrode and a negative electrode are wound with a porous insulating layer interposed therebetween. The power-generating element is disposed together with an electrolyte in a battery case made of metal, such as stainless, nickel-plated iron, aluminum, or the like. The battery case is sealed with a lid plate.

The positive electrode includes a positive electrode active material provided on a sheet-like or foil-like positive electrode current collector. Examples of the positive electrode active material include lithium cobalt composite oxides and the like electrochemically reacting with lithium ions reversibly. The negative electrode includes a negative electrode active material provided on a sheet-like or foil-like negative electrode current collector. Examples of the negative electrode active material include carbon and the like capable of inserting and extracting lithium ions. The porous insulating layer retains the electrolyte, and prevents short-circuiting between the positive electrode and the negative electrode. As the electrolyte, an aprotic organic solvent in which lithium salt such as $LiClO_4$ or $LiPF_6$ is dissolved is used.

Incidentally, high-capacity nonaqueous secondary batteries are being demanded in these days. One of methods for increasing the capacity of a nonaqueous electrolyte secondary battery may be increasing the filling density of an active material in a material mixture layer.

CITATION LIST

PATENT DOCUMENT

PATENT DOCUMENT 1: Japanese Patent Publication No. H05-182692

SUMMARY OF THE INVENTION

TECHNICAL PROBLEM

However, it was found that an increased filling density of an active material in a material mixture layer causes a decline in the manufacturing yield of a nonaqueous electrolyte secondary battery and a reduction of the safety of the nonaqueous electrolyte secondary battery.

The present invention has been made in view of the foregoing. It is an objective of the present invention to provide a nonaqueous electrolyte secondary battery having an increased capacity without lowering its manufacturing yield and without degrading its safety.

SOLUTION TO THE PROBLEM

A nonaqueous electrolyte secondary battery according to the present invention includes an electrode group including a positive electrode in which a positive electrode material mixture layer having a positive electrode active material is provided on a positive electrode current collector, a negative electrode in which a negative electrode material mixture layer having a negative electrode active material is provided on a negative electrode current collector, and a porous insulating layer, where the positive electrode and the negative electrode are wound with the porous insulating layer interposed therebetween. The frequency distribution curve for particle sizes of the positive electrode active material has two or more peaks. The positive electrode material mixture layer is provided on at least one of both surfaces of the positive electrode current collector, the at least one surface being located inside in a radial direction of the electrode group. The positive electrode material mixture layer has a porosity of 20% or lower. A tensile extension $\varepsilon$ in a winding

direction of the positive electrode satisfies the relationship $\varepsilon \geq \eta/\rho$, where $\eta$ is a thickness of the positive electrode material mixture layer provided on the surface located inside in the radial direction of the electrode group of the surfaces of the positive electrode current collector, and $\rho$ is a minimum radius of curvature of the positive electrode.

In the above configuration, even when the positive electrode material mixture layer becomes hard due to a reduction in porosity of the positive electrode material mixture layer, the electrode group of wound type (an electrode group in which a positive electrode and a negative electrode are wound with a porous insulating layer interposed therebetween) can be fabricated without breaking the positive electrode current collector.

Moreover, in the above configuration, an increase of the specific surface of the positive electrode active material due to a reduction in porosity of the positive electrode material mixture layer can be limited. Thus, it is possible to prevent release of gas from the positive electrode active material during charge/discharge under a high temperature or storage under a high temperature.

Here, the term "tensile extension in a winding direction of a positive electrode" in the present description is a value measured in accordance with the following method. First, a sample positive electrode (having a width of 15 mm and a length of 20 mm in the winding direction) is prepared. Next, one end in the winding direction of the sample positive electrode is fixed, and the other end in the winding direction of the sample positive electrode is pulled in the winding direction at a speed of 20 mm/min. The length in the winding direction of the sample positive electrode immediately before breakage is measured. Then, from this length and the length in the winding direction of the sample positive electrode before pulling, the tensile extension in the winding direction of the positive electrode is calculated.

The term, "porosity of a positive electrode material mixture layer" in the present description is a ratio of the total volume of pores present in the positive electrode material mixture layers to the total volume of the positive electrode material mixture layers, and is calculated by using the following equation.

$$\text{Porosity} = 1 - (\text{volume of components } 1 + \text{volume of components } 2 + \text{volume of components } 3) \,/\, (\text{volume of positive electrode material mixture layers})$$

Here, the volume of positive electrode material mixture layers is calculated in such a manner that a positive electrode is cut to have a predetermined dimension after the thickness of the positive electrode material mixture layer is measured using a scanning electron microscope.

The components 1 are components of a positive electrode material mixture which are dissoluble in acid. The components 2 are components of the positive electrode material mixture which are insoluble in acid, and have thermal volatility. The components 3 are components of the positive electrode material mixture which are insoluble in acid, and have no thermal volatility. The volumes of the components 1-3 are calculated in the following methods.

First, a positive electrode cut to have a predetermined dimension is separated into a positive electrode current collector and positive electrode material mixture layers. Then, the weight of the positive electrode material mixture is measured. Subsequently, the positive electrode material mixture is dissolved in acid to separate into components dissolved in the acid and components not dissolved in the acid. The components dissolved in the acid are subjected to a qualitative and quantitative analysis using a fluorescent X-ray and to a structure analysis by X-ray diffraction. From the result of the qualitative and quantitative analysis and the result of the structure analysis, the lattice constant and the molecular weight of the components are calculated. Thus, the volume of the components 1 can be calculated.

Referring on the other hand to the components not dissolved in the acid, the weight of the components is measured first. Then, the components are subjected to a qualitative analysis using gas chromatography/mass spectrometry, and then are subjected to a thermogravimetric analysis. This volatilizes components having thermal volatility from the component not dissolved in the acid. However, not all components having thermal volatility may be volatized from the components not dissolved in the acid by the thermogravimetric analysis. For this reason, it is difficult to calculate, from the result of the thermogravimetric analysis (the result of the thermogravimetric analysis on the sample), the weight of the components having thermal volatility of the components not dissolved in the acid. In view of this, a reference sample of the components having thermal volatility of the components not dissolved in the acid is prepared, and subjected to thermogravimetric analysis (from the result of the qualitative analysis using gas chromatography/mass spectrometry, the compositions of the components having thermal volatility of the components not dissolved in the acid have been known). Then, from the result of the thermogravimetric analysis on the sample and the result of the thermogravimetric analysis on the reference sample, the weight of the components having thermal volatility of the components not dissolved in the acid is calculated. From the weight thus calculated and the true density of the components having thermal volatility of the components not dissolved in the acid, the volume of the components 2 is calculated.

Once the weight of the components having thermal volatility of the components not dissolved in the acid is known, the weight of the components having no thermal volatility of the components not dissolved in the acid can be obtained from the result of the thermogravimetric analysis on the sample and the weight of the sample. From the weight thus obtained and the true specific gravity of the components having no thermal volatility of the components not dissolved in the acid, the volume of the components 3 is calculated.

Moreover, the "frequency distribution curve for particle sizes of the positive electrode active material" in the present specification is obtained by laser diffraction scattering using a sample prepared by dispersing a positive electrode active material in water.

In the nonaqueous electrolyte secondary battery according to the present invention, of particle sizes at the peaks in the frequency distribution curve for the particle sizes of the positive electrode active material, a minimum particle size is preferably smaller than or equal to 2/3 of a maximum particle size. This makes it possible in the positive electrode material mixture layer to fill a positive electrode active material having a relatively small diameter into pores formed by filling a positive electrode active material having a relatively large diameter at a high density. More preferably, the minimum particle size is in the range from 0.1 $\mu$m to 5 $\mu$m, both inclusive, and the maximum particle size is in the range from 10 $\mu$m to 40 $\mu$m, both inclusive.

In the nonaqueous electrolyte secondary battery according to the present invention, the porosity of the positive electrode material mixture layer is preferably 15% or lower, and is more preferably 10% or lower. The frequency distribution curve for the particle sizes of the positive electrode active material of the present invention has two or more peaks. Thus, a positive electrode material mixture layer having a porosity of 10% or lower can be formed without the positive electrode active material being crushed during rolling. Moreover, when the nonaqueous electrolyte secondary battery is charged/discharged at a low rate, the lower the porosity of the positive electrode material mixture layer is, the more the battery capacity can be improved.

In a preferable embodiment described later, the minimum radius $\rho$ of curvature of the positive electrode is a radius of curvature of a part of the positive electrode material mixture layer, the part forming an innermost surface of the electrode group.

In the nonaqueous electrolyte secondary battery according to the present invention, the tensile extension $\varepsilon$ in the winding direction of the positive electrode is preferably equal to or higher than 2%.

In the preferable embodiment described later, the positive electrode is obtained by applying positive electrode material mixture slurry containing a positive electrode active material onto a surface of the positive electrode current collector, and then drying the applied slurry, and thereafter performing heat treatment after rolling on the positive electrode current collector having the surface on which the positive electrode active material is provided. In this case, if the positive electrode current collector is mainly made of aluminum, and contains a certain amount of iron, it is possible to reduce the temperature or the time period of the heat treatment after rolling, which is necessary for setting the tensile extension $\varepsilon$ in the winding direction of the positive electrode to be equal to or larger than $\eta/\rho$ ($\varepsilon \geq \eta/\rho$).

Referring to a method for fabricating such a nonaqueous electrolyte secondary battery, the positive electrode is fabricated by (a) applying positive electrode material mixture slurry containing a positive electrode active material onto a surface of the positive electrode current collector, and then drying the applied slurry; (b) rolling the positive electrode current collector having the surface on which the positive electrode active material is provided; and (c) performing, after (b), heat treatment on the rolled positive electrode current collector at a temperature equal to or higher than a softening temperature of the positive electrode current collector. With this method, it is possible to set the tensile extension $\varepsilon$ in the winding direction of the positive electrode to be equal to or larger than $\eta/\rho$ ($\varepsilon \geq \eta/\rho$). Thus, even when the porosity of the positive electrode material mixture layer is 20% or lower, the electrode group of wound type can be fabricated without breaking the positive electrode current collector. Moreover, a positive electrode active material whose frequency distribution curve for particle sizes has two or more peaks is employed in forming the positive electrode material mixture layer. Thus, the positive electrode material mixture layer can be formed without increasing the specific surface of the positive electrode active material. Therefore, it is possible to provide a nonaqueous electrolyte secondary battery in which release of gas from a positive electrode active material during charge/discharge under a high temperature or storage under a high temperature is reduced.

ADVANTAGES OF THE INVENTION

According to the present invention, the capacity of a nonaqueous electrolyte secondary battery can be increased without lowering its manufacturing yield and without degrading its safety.

BRIEF DESCRIPTION OF THE DRAWINGS

[FIG 1] FIG. 1 is a table indicating a result obtained by checking the presence or absence of breakage of positive electrode current collectors with the porosity of the positive electrode material mixture layers varied.

[FIG 2] FIGS. 2(a) and 2(b) are cross-sectional views of parts in the longitudinal direction of positive electrodes, where FIG. 2(a) is a cross-sectional view of a positive electrode in a non-wound state, and FIG. 2(b) is a cross-sectional view of a positive electrode in a wound state.

[FIG 3] FIGS. 3(a) and 3(b) are cross-sectional views of parts in the longitudinal direction of positive electrodes, where FIG. 3(a) is a cross-sectional view of a positive electrode including positive electrode material mixture layers having a high porosity, and FIG. 3(b) is a cross-sectional view of a positive electrode including positive electrode material mixture layers having a low porosity.

[FIG 4] FIGS. 4(a) and 4(b) are cross-sectional views of positive electrodes, where FIG. 4(a) is a cross-sectional view showing a state in which a positive electrode not subjected to heat treatment after rolling is pulled in the winding direction, and FIG. 4(b) is a cross-sectional view showing a state in which a positive electrode subjected to heat treatment after rolling is pulled in the winding direction.

[FIG 5] FIG. 5 is a table indicating results in the case where batteries were fabricated using positive electrodes in which positive electrode material mixture layers containing $LiCoO_2$ as a positive electrode active material are formed on a positive electrode current collector made of aluminum, where the results were obtained by measuring the tensile extensions of the positive electrodes subjected to heat treatment after rolling with conditions of the heat treatment changed.

[FIG 6] FIG. 6 is a table showing results obtained by examining whether or not batteries expand, where the examination was conducted with the porosity of positive electrode material mixture layers varied.

[FIG 7] FIG. 7 is a cross-sectional view schematically illustrating a configuration of a nonaqueous electrolyte secondary battery according to an embodiment of the present invention.

[FIG 8] FIG. 8 is an enlarged cross-sectional view schematically illustrating a configuration of an electrode group 8 in the embodiment of the present invention.

[FIG 9] FIG. 9 is an enlarged cross-sectional view illustrating a positive electrode material mixture layer 4B of a positive electrode 4 in the embodiment of the present invention.

[FIG 10] FIG. 10 is a graph schematically illustrating a frequency distribution curve for the particle sizes of a positive electrode active material in the embodiment of the present invention.

[FIG 11] FIGS. 11(a)-11(c) are cross-sectional views schematically illustrating how the arrangement of a positive electrode active material is changed by rolling, where a positive electrode is made of the positive electrode active material whose frequency distribution curve for particle sizes has only one peak.

[FIG 12] FIGS. 12(a) and 12(b) are cross-sectional views schematically illustrating how the arrangement of a positive electrode active material is changed by rolling, where a positive electrode is made of a positive electrode active material of the present embodiment.

[FIG 13] FIG. 13 is a cross-sectional view for explaining $\eta$ and $\rho$ in the embodiment of the present invention.

[FIG 14] FIG. 14 is a table indicating results obtained by checking easiness of causing a positive electrode current collector to be broken, with the tensile extension in the winding direction of positive electrodes varied, where $\eta/$ = 1.71 (%).

[FIG 15] FIG. 15 is a table indicating results obtained by checking easiness of causing a positive electrode current collector to be broken, with the tensile extension in the winding direction of positive electrodes varied, where $\eta/\rho$ = 2.14 (%).

[FIG 16] FIG. 16 is a table indicating results obtained by checking easiness of causing a positive electrode current collector to be broken, with the tensile extension in the winding direction of positive electrodes varied, where $\eta/\rho$ = 2.57 (%).

[FIG 17] FIG. 17 is a table indicating results obtained by measuring the porosity of positive electrode material mixture layer, with the pressure at rolling varied.

[FIG 18] FIG. 18 is a table indicating results obtained by examining whether or not a battery expands with the particle size distribution of a positive electrode active material varied.

DESCRIPTION OF EMBODIMENTS

Prior to description of embodiments of the present invention, the logic that the present invention was accomplished will be described.

As described above, high-capacity nonaqueous electrolyte secondary batteries have been demanded. To meet this demand, an increase in filling density of active materials in material mixture layers is being examined.

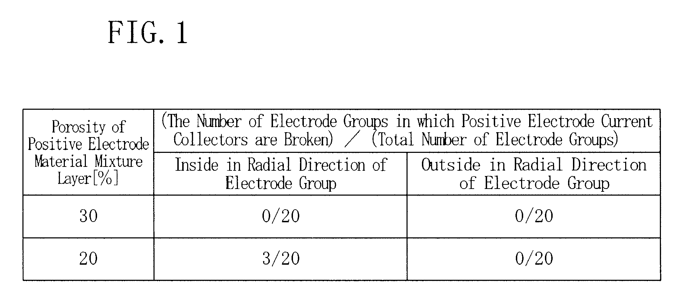

Excessively high filling densities of negative electrode active materials in negative electrode material mixture layers significantly reduce acceptance of lithium ions in negative electrodes to easily deposit lithium as metal on the surfaces of the negative electrodes, thereby reducing safety of nonaqueous electrolyte secondary batteries. This is a known problem. On the other hand, an increase in filling density of positive electrode active materials in positive electrode material mixture layers is not considered to cause such a problem. In view of this, the present inventors formed electrode groups of wound type by using positive electrodes including positive electrode material mixture layers whose positive electrode active material has a filling density higher than the conventional filling density (in other words, by using positive electrodes whose positive electrode material mixture layers have a porosity lower than the conventional porosity). The result is indicated in FIG. 1. As indicated in FIG. 1, it was found that, as the porosity of the positive electrode material mixture layers decreases below the conventional porosity (the porosity of conventional positive electrode material mixture layers is around 30%), the positive electrode current collectors tend to be broken in winding, starting from around 20% porosity of the positive electrode material mixture layers. Although not indicated in FIG. 1, the lower than 20% the porosity of the positive electrode material mixture layers becomes, the more easily the positive electrodes tend to be broken in winding. For example, when the porosity of positive electrode material mixture layers was around 15%, positive electrode current collectors of half of the fabricated electrode groups were broken in winding, and when the porosity of the positive electrode material mixture layers was reduced to around 10%, the positive electrode current collectors of most of the fabricated electrode groups were broken in winding. Additionally, the electrode groups including broken positive electrode current collectors were further examined, and it was found that breakage of the positive electrode current collectors concentrated at parts located inside in the radial direction of the electrode groups, as indicated in FIG. 1. Regarding these results, the present inventors considered the following.

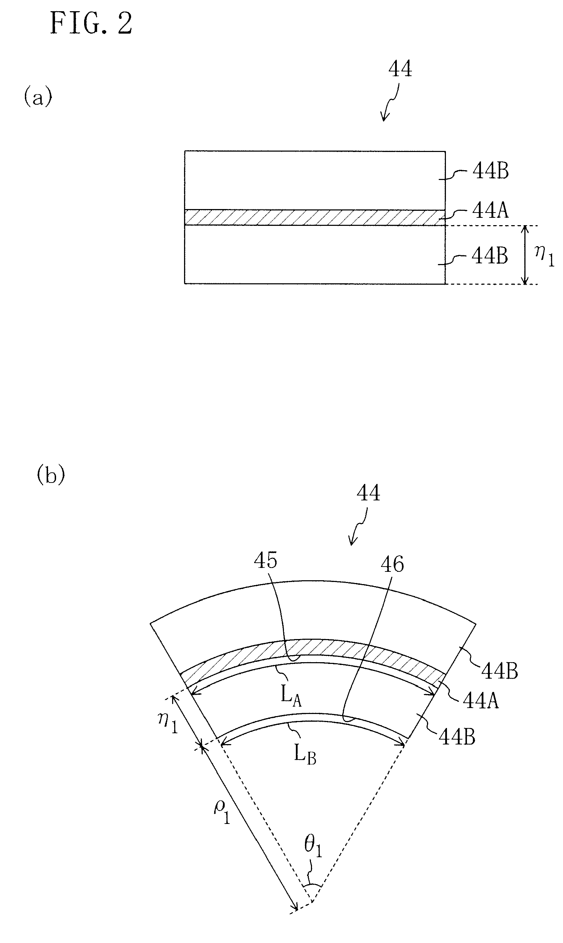

FIGS. 2(a) and 2(b) are cross-sectional views of a part in the longitudinal direction of a positive electrode 44, where FIG. 2(a) is a cross-sectional view of the positive electrode 44 in a non-wound state, and FIG. 2(b) is a cross-sectional view of the positive electrode 44 in a wound state (a part of a positive electrode included in an electrode group of wound type).

When the positive electrode 44 shown in FIG. 2(a) is wound so that one positive electrode material mixture layer 44B of two positive electrode material mixture layers 44B is located inside, a tensile stress acts on a positive electrode current collector 44A and the outside positive electrode material mixture layer (a positive electrode material mixture layer formed on one of the surfaces of the positive electrode current collector 44A located outside in the radial direction of the electrode group of wound type) 44B. For example, as shown in FIG. 2(b), where $\eta_1$ is a thickness of the inside positive electrode material mixture layer 44B (a positive electrode material mixture layer formed on one surface, e.g., an inner peripheral surface 45, of the surfaces of the positive electrode current collector 44A located inside in the radial direction of the electrode group of wound type), $\rho_1$ is a radius of curvature of an inner peripheral surface 46 of the inside positive electrode material mixture layer 44B, and $\theta_1$ is a central angle, the length ($L_A$) in the winding direction of an inner peripheral surface 45 of the positive electrode current collector 44A is

$$L_A = (\rho_1 + \eta_1)\theta_1 \ldots \text{(Expression 1)}$$

The length ($L_B$) in the winding direction of the inner peripheral surface 46 of the inside positive electrode material mixture layer 44B is

$$L_B = \rho_1\theta_1 \ldots \text{(Expression 2)}$$

Accordingly, when the positive electrode 44 shown in FIG. 2(a) is wound, the positive electrode current collector 44A extends in the winding direction more than the inside positive electrode material mixture layer 44B by

$$L_A - L_B = (\rho_1 + \eta_1)\theta_1 - \rho_1\theta_1 = \eta_1\theta_1 \ldots \text{(Expression 3)}$$

The ratio ($L_A$ - $L_B$)/$L_B$) is

$$(L_A - L_B)/L_B = \eta_1\theta_1/\rho_1\theta_1 = \eta_1/\rho_1 \ldots \text{(Expression 4)}$$

Since $\rho_1$ is smaller in the inside than in the outside in the radial direction of the electrode group, the ratio (($L_A$ - $L_B$)/$L_B$) is larger in the inside than in the outside in the radial direction of the electrode group. Accordingly, in the outside in the radial direction of the electrode group, even if the positive electrode current collector 44A cannot extend so much in the winding direction, an electrode group of wound type can be fabricated without breaking the positive electrode current collector 44A. On the other hand, in the inside in the radial direction of the electrode group, if the positive electrode current collector 44A cannot extend enough, it is difficult to fabricate an electrode group of wound type without breaking the positive electrode current collector 44A. As a result, breakage of the positive electrode current collector 44A might concentrate on the inside in the radial direction of the electrode group.

However, the above consideration can explain only the reason that positive electrode current collectors tend to be broken in winding as the radius of curvature becomes small, and cannot explain the reason that positive electrode current collectors tend to be broken in winding as the porosity of positive electrode material mixture layers is reduced. Then, the present inventors examined various phenomena arising due to reducing the porosity of positive electrode material mixture layers, and concluded that as described below, the reduction in porosity of positive electrode material mixture layers hardens the positive electrode material mixture layers, which may lead to a tendency to breakage of positive electrode current collectors in winding.

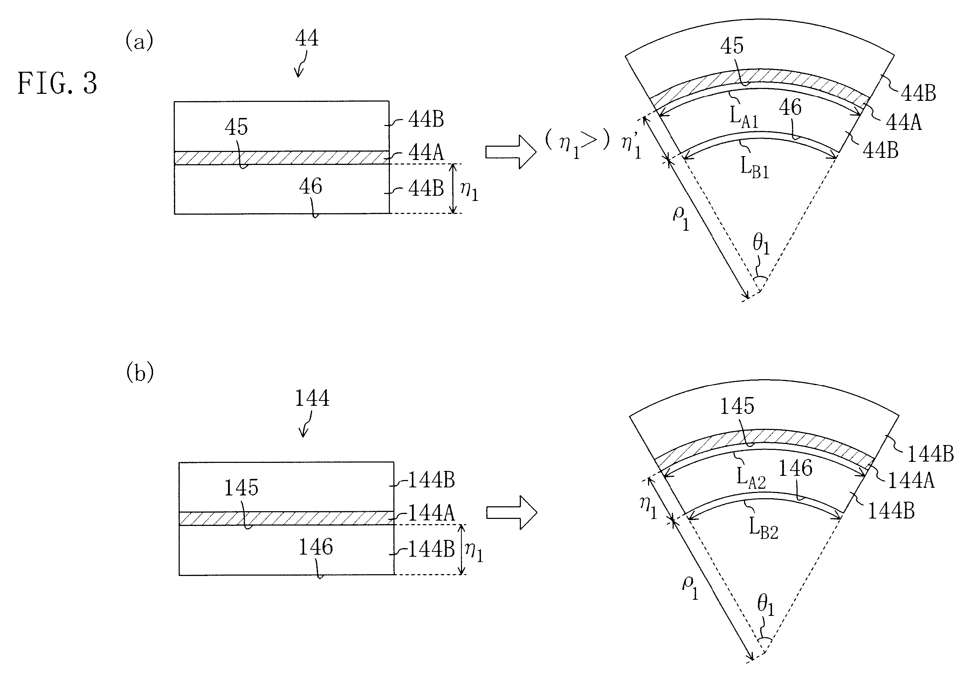

FIGS. 3(a) and 3(b) are cross-sectional views of parts in the longitudinal direction of positive electrodes 44, 144, where FIG. 3(a) is a cross-sectional view of the positive electrode 44 whose positive electrode material mixture layers 44B, 44B have a high porosity, and FIG. 3(b) is a cross-sectional view of the positive electrode 144 whose positive electrode material mixture layers 144B, 144B have a low porosity. In both FIGS. 3(a) and 3(b), the positive electrodes 44, 144 in a non-wound state are illustrated on the left of the arrows, and the positive electrodes 44, 144 in a wound state are illustrated on the right of the arrows.

When the positive electrodes 44, 144 are wound, a tensile stress acts on the positive electrode current collectors 44A, 144A and the outside positive electrode material mixture layers 44B, 144B, as described above, while a compressive stress acts on the inside positive electrode material mixture layers 44B, 144B. In the case where the positive electrode material mixture layers 44B, 44B have a high porosity (for example, where the porosity of the positive electrode material mixture layers 44B, 44B is about 30%), winding the positive electrode 44 contracts the inside positive electrode material mixture layer 44B in the thickness direction of the positive electrode 44. That is, the thickness ($\eta_1$') of the inside positive electrode material mixture layer 44B after winding is smaller than the thickness ($\eta_1$) of the inside positive electrode material mixture layer 44B before winding ($\eta_1$' < $\eta_1$). Accordingly, it is sufficient that the length ($L_{A1}$) in the winding direction of the inner peripheral surface 45 of the positive electrode current collector 44A can extend to be longer than the length ($L_{B1}$) in the winding direction of the inner peripheral surface 46 of the inside positive electrode material mixture layer 44B only by

$$L_{A1} - L_{B1} = L_{B1} \times (\eta_1{'}/\rho_1) < L_{B1} \times (\eta_1/\rho_1) \ldots \text{(Expression 5)}$$

On the other hand, in the case where the positive electrode material mixture layers 144B, 144B have a low porosity (for example, where the porosity of the positive electrode material mixture layers 144B, 144B is 20% or lower), the inside positive electrode material mixture layer 144B is harder than the inside positive electrode material mixture layer 44B. Accordingly, even when the compressive stress acts on the inside positive electrode material mixture layer 144B by winding, the inside positive electrode material mixture layer 144B contracts little in the thickness direction of the positive electrode 144. For this reason, the length ($L_{A2}$) in the winding direction of the inner peripheral surface 145 of the positive electrode current collector 144A must extend to be longer than the length ($L_{B2}$) in the winding direction of the inner peripheral surface 146 of the inside positive electrode material mixture layer 144B by

$$L_{A2} - L_{B2} = L_{B2} \times (\eta_1/\rho_1) \ldots \text{(Expression 6)}$$

Comparison between Expression 5 and Expression 6 concludes that unless the positive electrode current collector 144A extends more than the positive electrode current collector 44A in the winding direction, the positive electrode current collector 144A is broken in winding.

One of methods for preventing the positive electrode current collector 144A from being broken in winding may be removing some amount of the positive electrode active material and the like from the positive electrode material mixture layers 144B in winding. However, removing some amount of the positive electrode active material and the like from the positive electrode material mixture layers 144B reduces the battery capacity of the fabricated battery when compared with that at design, or causes the positive electrode active material and the like removed from the positive electrode material mixture layers 144B to break the porous insulating layer, thereby causing problems, such as occurrence of the internal short circuit. For this reason, winding is carried out so that active materials and the like will not be removed from material mixture layers. Therefore, the present inventors have considered that, as a method for preventing the positive electrode current collector 144A from being broken in winding, the method of removing the positive electrode active material and the like from the positive electrode material mixture layers 144B in winding is not favorable, and selection of a method using a positive electrode current collector capable of sufficiently extending in the winding direction may be favorable.

Further, the present inventors paid particular attention to the fact that positive electrode material mixture layers are formed on the surfaces of a positive electrode current collector in a positive electrode, and considered that even with a positive electrode current collector capable of sufficiently extending in the winding direction, it is difficult to reduce breakage of the positive electrode current collector in wining unless positive electrode material mixture layers are formed so as to sufficiently extend in the winding direction. In other words, the present inventors concluded that sufficient extension of a positive electrode in the winding direction can increase the battery capacity of a nonaqueous electrolyte secondary battery with breakage of a positive electrode current collector in winding reduced.

Incidentally, one of the applicants of this application discloses a method for increasing the tensile extension of a positive electrode in Japanese Patent Application No. 2007-323217 (corresponding to PCT/JP2008/002114).

Specifically, first, positive electrode material mixture slurry containing a positive electrode active material, a conductive agent, and a binder is applied onto a positive electrode current collector, and is dried. Thus, a positive electrode current collector having surfaces on which the positive electrode active material, the conductive agent, and the like are provided is fabricated. Next, this positive electrode current collector (the current collector having the surfaces on which the positive electrode active material, the conductive agent, and the like are provided) is rolled, and is then subjected to heat treatment at a predetermined temperature. Thus, when heat treatment at the predetermined temperature is performed, after rolling, on the positive electrode current collector having surfaces on which the positive electrode active material, the conductive agent, and the like are provided (hereinafter also simply referred to as "performing heat treatment after rolling," "heat treatment after rolling," or the like), the tensile extension of the positive electrode can be increased more than that before the heat treatment.

The mechanism that can increase the tensile extension of a positive electrode by heat treatment after rolling more than that before the heat treatment is probably as follows.

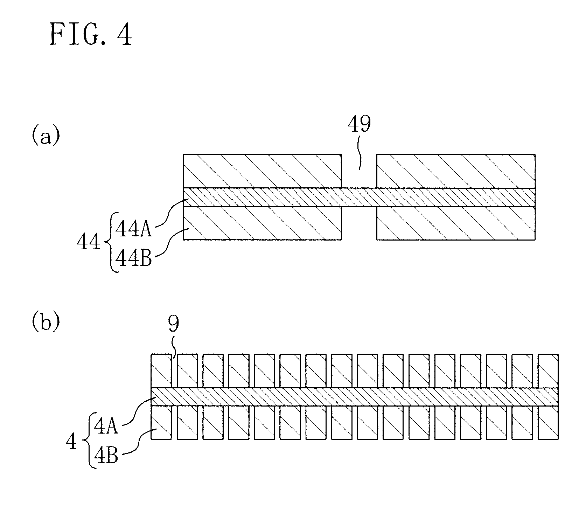

FIGS. 4(a) and 4(b) are cross-sectional views of positive electrodes, where FIG. 4(a) is a cross-sectional view showing a state in which a positive electrode not subjected to heat treatment after rolling is pulled in the winding direction, and FIG. 4(b) is a cross-sectional view showing a state in which a positive electrode subjected to heat treatment after rolling is pulled in the winding direction.

The tensile extension of a positive electrode is not defined by only the inherent tensile extension of its positive electrode current collector itself because positive electrode material mixture layers are formed on the surfaces of the positive electrode current collector. In general, the tensile extension of the positive electrode material mixture layers is lower than that of the positive electrode current collector. Accordingly, when the positive electrode not subjected to heat treatment after rolling is extended, the positive electrode 44 is broken at the same time when a large crack 49 occurs in the positive electrode material mixture layers 44B as shown in FIG 4(a). This may be because a tensile stress in the positive electrode material mixture layers 44B increases as the positive electrode 44 is extended, and in turn, the increased tensile stress is applied intensively to a portion of the positive electrode current collector 44A where the large crack 49 occurs, thereby breaking the positive electrode current collector 44A.

In contrast, when a positive electrode 4 subjected to heat treatment after rolling is extended, the positive electrode 4, in which a positive electrode current collector 4A is softened, continues to extend (FIG. 4(b)) while multiple minute cracks 9 occur in positive electrode material mixture layers 4B. In the end, the positive electrode 4 is broken. This may be because a tensile stress applied to the positive electrode current collector 4A is dispersed by occurrence of the multiple minute cracks 9, and thus the occurrence of the cracks 9 in the positive electrode material mixture layers 4B influences little the positive current collector 4A, so that the positive electrode 4 continues to extend up to a given length without being broken at the same time when the cracks 9 occur, and is then broken at the time the tensile stress reaches a given value (a value approximate to the inherent tensile extension of the positive current collector 4A).

The tensile extension of a positive electrode obtained by heat treatment after rolling varies depending on the materials of a positive electrode current collector and a positive electrode active material, or conditions for the heat treatment after rolling. For example, in a positive electrode in which a positive electrode material mixture layers containing $LiCoO_2$ as a positive electrode active material is formed on a positive electrode current collector made of aluminum, heat treatment at a temperature of 200°C or higher (for 180 seconds) after rolling can increase the tensile extension of the positive electrode to 3% or more.

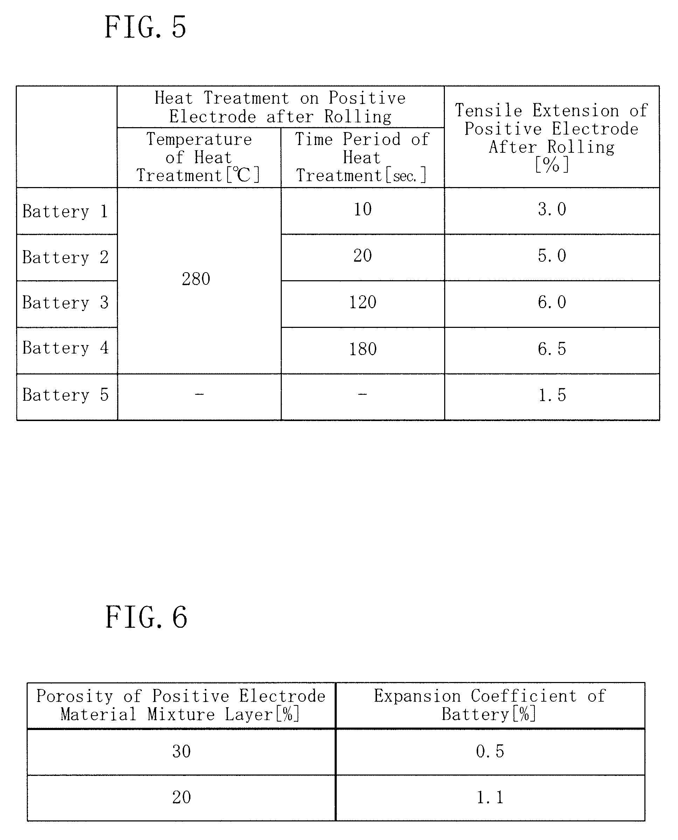

FIG. 5 is a table indicating tensile extensions of positive electrodes measured with the conditions for the heat treatment after rolling varied, where Batteries were each fabricated using a positive electrode in which positive electrode material mixture layers containing $LiCoO_2$ as a positive electrode active material are formed on a positive electrode current collector containing 1.2 weight percent (wt. %) or more iron with respect to aluminum. Here, positive electrodes of Batteries 1-4 were subjected to, after rolling, heat treatment at a temperature of 280°C for time periods of 10 seconds, 20 seconds, 120 seconds, and 180 seconds, respectively. Battery 5 was not subjected to heat treatment after rolling.

As indicated in FIG. 5, the tensile extension of the positive electrode of Battery 5 not subjected to heat treatment after rolling was 1.5%, whereas the tensile extensions of the positive electrodes of Batteries 1-4 subjected to the heat treatment after rolling were 3 to 6.5%. From these results, it is understood that the tensile extensions of the positive electrodes of Batteries 1-4 are larger than the tensile extension of the positive electrode of Battery 5.

Further examinations by one of the applicants of this application confirmed the followings. Even when the temperature of heat treatment after rolling is lower than that indicated in FIG. 5 ((the softening temperature of a positive electrode current collector)≤(a temperature of heat treatment after rolling) < (the melting temperature of a binder contained in positive electrode material mixture layers)), or even when the time period of heat treatment after rolling is shorter than that indicated in FIG. 5 (e.g., in a range equal to or longer than 0.1 seconds and equal to or shorter than several minutes), the tensile extension of a positive electrode can be set to a preferred value.

From the above description, the present inventors concluded that fabrication of a positive electrode according to the method disclosed in the description of the aforementioned application (that is, heat treatment at a predetermined temperature after rolling on a positive electrode current collector having surfaces provided with a positive electrode active material) can reduce breakage of the positive electrode current collector in winding even when the porosity of positive electrode material mixture layers is 20% or lower, even 15% or lower, or even 10% or lower. Then, according to the method disclosed in the description of the aforementioned application, positive electrodes whose positive electrode material mixture layers each have a porosity of 30% and positive electrodes whose positive electrode material mixture layers each have a porosity of 20% were formed. Using these positive electrodes, electrode groups of wound type were formed. Then, using these electrode groups of wound type, nonaqueous electrolyte secondary batteries were fabricated. Then, some of the fabricated batteries were charged/discharged under a high temperature, and other batteries of the fabricated batteries were stored under a high temperature. Here, when the positive electrodes whose positive electrode material mixture layers each have a porosity of 20% were formed, a higher pressure was used in rolling in comparison to the case of formation of the positive electrodes whose positive electrode material mixture layers each have a porosity of 30%. Results are shown in FIG. 6. In all of the batteries, the positive electrode current collectors were not broken in winding. However, as illustrated in FIG 6, in the nonaqueous electrolyte secondary batteries whose positive electrode material mixture layers each have a porosity of 30%, the expansion coefficient of each battery was 0.5% (the radius of the battery increased only by 0.5%). In contrast, in the nonaqueous electrolyte secondary batteries whose positive electrode material mixture layers each have a porosity of 20%, the expansion coefficient of each battery was 1.1% (the radius of the battery increased by 1.1%). Moreover, although not shown in FIG. 6, in the case of cylindrical batteries, the smaller the porosity of positive electrode material mixture layers was, the more the diameter of the batteries increased during charge/discharge under a high temperature or storage under a high temperature, and in the case of rectangular batteries, the smaller the porosity of positive electrode material mixture layers was, the more the thickness of the batteries increased during charge/discharge under a high temperature or storage under a high temperature. To consider the reason why the above results were obtained, the present inventors examined the batteries which expanded during charge/discharge under a high temperature, or storage under a high temperature. As a result, the present inventors found that gas was emitted during charge/discharge under a high temperature, or storage under a high temperature, increasing internal pressure of the batteries. Then, the reason for the gas emission during charge/discharge at a high temperature or storage under a high temperature was considered.

Conventionally, gas may be emitted in nonaqueous electrolyte secondary batteries. This may be caused due to decomposition of a nonaqueous electrolyte, reaction between a positive electrode active material and the nonaqueous electrolyte, or the like at the time of overcharge or the like. However, these reasons cannot explain why release of gas more likely occurs in nonaqueous electrolyte secondary batteries during charge/discharge under a high temperature, or storage under a high temperature as the porosity of positive electrode material mixture layer lowers.

Incidentally, the positive electrodes whose positive electrode material mixture layers each have a porosity of 20% were formed using a higher pressure in rolling in comparison to the case of formation of the positive electrodes whose positive electrode material mixture layers each have a porosity of 30%. Therefore, the positive electrodes whose positive electrode material mixture layers each have a porosity of 30% and the positive electrodes whose positive electrode material mixture layers each have a porosity of 20% were compared with each other. In the positive electrodes whose positive electrode material mixture layers each have a porosity of 30%, the size of the positive electrode active material did not change much before and after rolling. In contrast, in the positive electrodes whose positive electrode material mixture layers each have a porosity of 20%, the positive electrode active material was crushed due to rolling. From the result, the present inventors assumed as described below that the crushing of the positive electrode active material due to rolling relates to increase in amount of gas released during charge/discharge under a high temperature or storage under a high temperature.

When the positive electrode active material is crushed, the positive electrode active material comes to have a plurality of surfaces (surfaces which the positive electrode active material comes to have due to rolling are referred to as "newly formed surfaces"). Rolling is generally performed in air. Therefore, the newly formed surfaces are brought into contact with air, so that carbon dioxide, or the like in air may adhere to the newly formed surfaces. In this case, the positive electrode is inserted in a battery case with carbon dioxide, or the like adhered to the newly formed surfaces.

Thus, when a nonaqueous electrolyte secondary battery including such a positive electrode is charged/discharged or stored under a high temperature, carbon dioxide, or the like adhered to the newly formed surfaces is released from the positive electrode. As a result of further examinations, it was found that most of gases such as carbon dioxide or the like released from the positive electrode during charge/discharge under a high temperature or storage under a high temperature resulted from gases adhered to the newly formed surfaces.

In sum, the present inventors found a problem that with positive electrode material mixture layers having a low porosity due to a high pressure in rolling, a battery expands during charge/discharge under a high temperature or storage under a high temperature. As one of factors causing the problem, the present inventors considered that a higher pressure in rolling than a conventional pressure crushes a positive electrode active material. Then, the present inventors concluded that if the porosity of the positive electrode material mixture layer can be lowered while limiting newly formed surfaces, it is possible to reduce expansion of the battery during charge/discharge under a high temperature or storage under a high temperature. As a result, the present invention was achieved. An embodiment of the present invention will be described below with reference to the drawings. The present invention is not limited to the following embodiments. As to a configuration of nonaqueous electrolyte secondary batteries referred to in the present embodiments, the configuration described in the description of the aforementioned application filed by the present applicant can be applied.

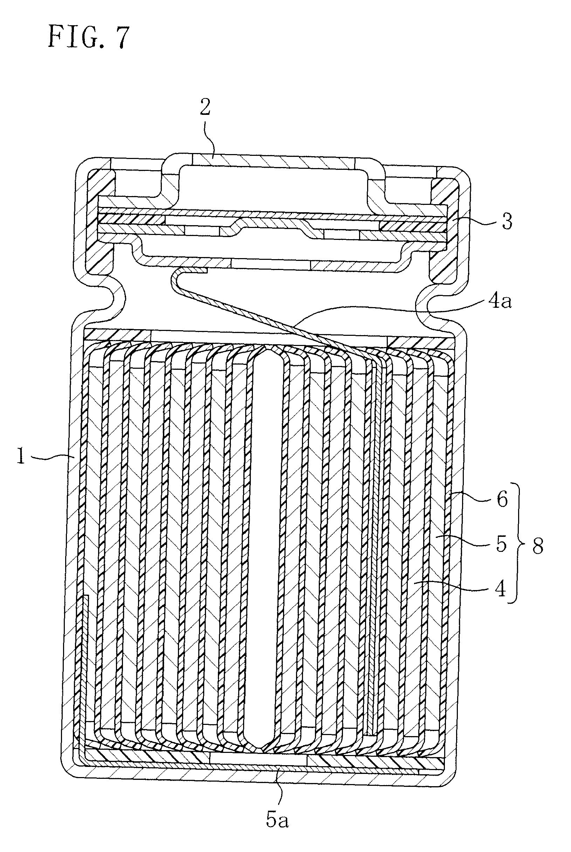

FIG. 7 is a cross-sectional view schematically showing a configuration of a nonaqueous electrolyte secondary battery in an embodiment of the present invention.

As shown in FIG. 7, in the nonaqueous electrolyte secondary battery according to the present embodiment, an electrode group 8, in which a positive electrode 4 and a negative electrode 5 are wound with a porous insulating layer 6 interposed therebetween, is housed in a battery case 1 together with an electrolyte. An opening part of the battery case 1 is sealed by a sealing plate 2 through a gasket 3. A positive electrode lead 4a attached to the positive electrode 4 is connected to the sealing plate 2 serving also as a positive electrode terminal. A negative electrode lead 5a attached to the negative electrode 5 is connected to the battery case 1 serving also as a negative electrode terminal.

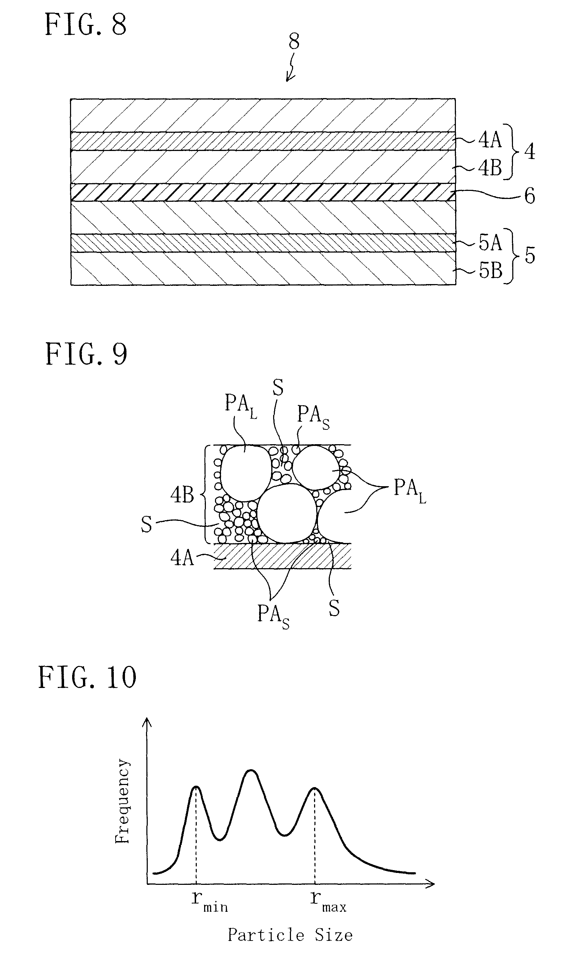

FIG 8 is an enlarged cross-sectional view schematically showing a configuration of the electrode group 8 in the present embodiment.

As shown in FIG. 8, positive electrode material mixture layers 4B are formed on both surfaces of a positive electrode current collector 4A. Negative electrode material mixture layers 5B are formed on both surfaces of a negative electrode current collector 5A. The porous insulating layer 6 is interposed between the positive electrode 4 and the negative electrode 5. The positive electrode 4 in the present embodiment will be described in detail below.

FIG. 9 is a cross-sectional view schematically illustrating the positive electrode material mixture layer 4B of the positive electrode 4 in the present embodiment. FIG. 10 is a graph schematically illustrating the frequency distribution curve for the particle sizes of positive electrode active materials in the present embodiment.

As illustrated in FIG. 9, the positive electrode material mixture layers 4B include positive electrode active materials which are different from each other in particle size. A positive electrode active material $PA_L$ having a relatively large diameter is filled at a high density, thereby forming pores S, which are filled with a positive electrode active material $PA_S$ having a relatively small diameter. In this configuration, the filling density of the positive electrode active materials in the positive electrode material mixture layers 4B can be higher than that in conventional configurations. Specifically, the porosity of the positive electrode material mixture layers 4B can be 20% or lower, can be 15% or lower, or can be 10% or lower in some cases. Thus, it is possible to meet the recent-day demand of increasing the capacity of nonaqueous electrolyte secondary batteries.

When the frequency distribution curve for the particle sizes of the positive electrode active materials in the positive electrode material mixture layers 4B is measured, the frequency distribution curve has two or more peaks as illustrated in FIG. 10 (note that the number of peaks is not limited to but is three in FIG. 10 for the sake of simplicity). If the difference between the minimum particle size ($r_{min}$) and the maximum particle size ($r_{max}$) of the particle sizes at the peaks is large, for example, if the minimum particle size ($r_{min}$) is smaller than or equal to 2/3 of the maximum particle size ($r_{max}$), the amount of the positive electrode active material $PA_S$ having a relatively small diameter in the pores S shown in FIG 9 is large, so that the filling density of the positive electrode active materials in the positive electrode material mixture layers 4B can be higher than that in conventional configurations.

Moreover, if the difference between the minimum particle size ($r_{min}$) and the maximum particle size ($r_{max}$) of the particle sizes at the peaks is large, the filling density of the positive electrode active materials in the positive electrode material mixture layers 4B can be increased without using a higher pressure in rolling than that used in conventional configuration. Thus, without using a higher pressure in rolling than that in conventional configuration, the porosity of the positive electrode material mixture layers 4B can be 20% or lower, can be 15% or lower, or can be 10% or lower in some cases. The positive electrode 4 in the present embodiment will be described below in comparison to the case of a positive electrode made of a positive electrode active material whose frequency distribution curve for particle sizes has only one peak.

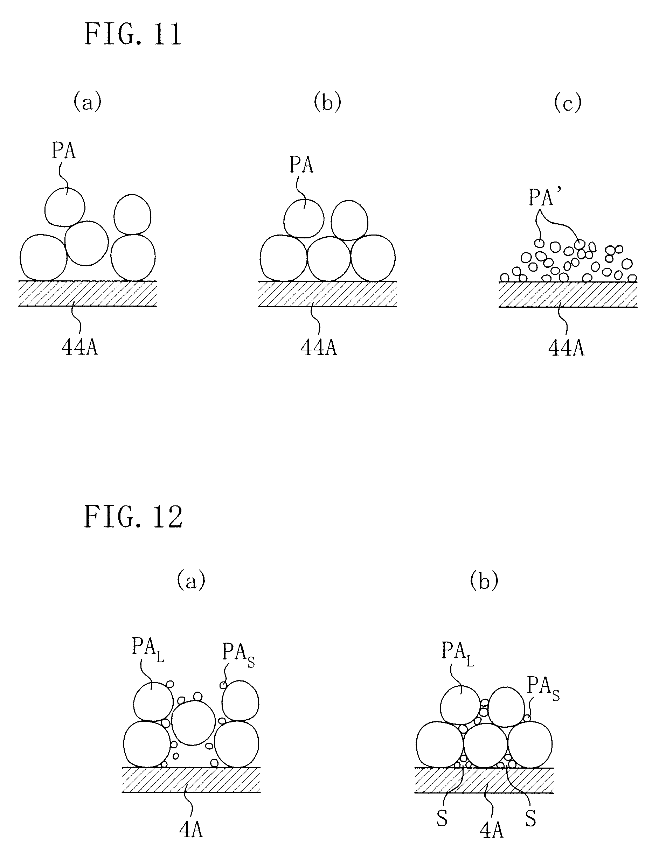

FIGS. 11(a)-11(c) are cross-sectional views schematically illustrating, when a positive electrode active material PA whose frequency distribution curve for particle sizes has only one peak is employed in forming a positive electrode, how the arrangement of the positive electrode active material PA is changed by rolling. FIGS. 12(a) and 12(b) are cross-sectional views schematically illustrating, when the positive electrode active materials in the present embodiment is employed in forming a positive electrode, how the arrangement of the positive electrode active materials is changed by rolling.

When the positive electrode active material PA whose frequency distribution curve for particle sizes has only one peak is employed in forming a positive electrode, the positive electrode active material PA randomly exists on the surface of the positive electrode current collector 44A before rolling (FIG. 11(a)), and is arranged, after rolling, at a high density on the surface of the positive electrode current collector 44A (FIG. 11(b)). That is, the filling density of the positive electrode active material PA in the positive electrode material mixture layers is determined by a density in the case where the positive electrode active material PA is filled at the highest density on the surface of the positive electrode current collector 44A. Thus, to accomplish a higher filling density of the positive electrode active material PA in the positive electrode material mixture layer than that of the case illustrated in FIG. 11(b), a pressure used in rolling has to be increased so that the positive electrode active material PA becomes a positive electrode active material PA' in pieces (FIG 11(c)).

Moreover, even when the frequency distribution curve for particle sizes has a plurality of peaks, if the difference between the minimum particle size ($r_{min}$) and the maximum particle size ($r_{max}$) of the particle sizes at the peaks is not much large, results similar to those in the case where the positive electrode active material PA whose frequency distribution curve for particle sizes has only one peak is employed in forming a positive electrode are obtained.

In contrast, when positive electrode active materials having a plurality of peaks in their frequency distribution curve for particle sizes and having a large difference between the minimum particle size ($r_{min}$) and the maximum particle size ($r_{max}$) of the particle sizes at the peaks are employed in forming a positive electrode (i.e., when the positive electrode active materials of the present embodiment is employed in forming a positive electrode), the positive electrode active material $PA_L$ having a relatively large diameter and the positive electrode active material $PA_S$ having a relatively small diameter randomly exist on the surface of the positive electrode current collector 4A before rolling (FIG. 12(a)). However, through rolling, the positive electrode active material $PA_L$ having a relatively large diameter is arranged at a high density on the surface of the positive electrode current collector 4A, thereby forming pores S, which are filled with the positive electrode active material $PA_S$ having a relatively small diameter (FIG. 12(b)). That is, in this case, without crushing the positive electrode active material $PA_L$ having a relatively large diameter and the positive electrode active material $PA_S$ having a relatively small diameter, the filling density of the positive electrode active materials in the positive electrode material mixture layers can be higher than that in the case where the positive electrode active material $PA_L$ having a relatively large diameter is filled at the highest density on the surface of the positive electrode current collector 4A.

As described above, when the positive electrode active materials in the present embodiment are employed in forming the positive electrode 4, the filling density of the positive electrode active materials in the positive electrode material mixture layers 4B can be increased without increasing the pressure used in rolling. Thus, the amount of carbon dioxide or the like in the air which adheres to the surfaces of the positive electrode active materials in rolling can be more reduced in comparison to the case where the positive electrode active material PA whose frequency distribution curve for particle sizes has only one peak is employed in forming a positive electrode. Therefore, it is possible to prevent the positive electrode from being housed in the battery case with carbon dioxide or the like in the air being adhered to the positive electrode active materials. Thus, in the nonaqueous electrolyte secondary battery according to the present embodiment, the amount of release of gas such as carbon dioxide during charge/discharge under a high temperature or storage under a high temperature can be reduced, so that it is possible to prevent the expansion caused by the gas release.

The frequency distribution curve for the particle sizes of the positive electrode active materials in the present embodiment will further be described. Of particle sizes at the peaks of the frequency distribution curve for the particle sizes, the minimum particle size ($r_{min}$) may be smaller than or equal to 2/3 of the maximum particle size ($r_{max}$), is preferably larger than or equal to 1/400 and smaller than or equal to 1/2 of the maximum particle size ($r_{max}$), and is more preferably larger than or equal to 1/100 and smaller than or equal to 1/5 of the maximum particle size ($r_{max}$). In other words, the minimum particle size ($r_{min}$) of the particle sizes at the peaks of the frequency distribution curve for the particle sizes is preferably larger than or equal to 0.1 $\mu$m and smaller than or equal to 5 $\mu$m, and is more preferably larger than or equal to 0.5 $\mu$m and smaller than or equal to 2 $\mu$m. Moreover, the maximum particle size ($r_{max}$) of the particle sizes at the peaks of the frequency distribution curve for the particle sizes is preferably larger than or equal to 10 $\mu$m and smaller than or equal to 40 $\mu$m, and is more preferably larger than or equal to 15 $\mu$m and smaller than or equal to 30 $\mu$m.. Here, if the particle sizes of the positive electrode active materials are larger than 40 $\mu$m, lithium ions less easily diffuse in the positive electrode active materials, which degrades the performance of the nonaqueous electrolyte secondary battery. Moreover, if the particle sizes of the positive electrode active materials are smaller than 0.1 $\mu$m, the specific surface of the positive electrode active materials is large, so that the gas release becomes significant when the nonaqueous electrolyte secondary battery is subjected to a high temperature.

Moreover, in the positive electrode material mixture layers 4B, the positive electrode active materials which are different from each other in particle size may have the same volume. However, if the volume of the positive electrode active material $PA_S$ having a relatively small diameter in the positive electrode material mixture layers 4B is smaller than the volume of the positive electrode active material $PA_L$ having a relatively large diameter in the positive electrode material mixture layers 4B, the filling density of the positive electrode active materials in the positive electrode material mixture layers 4B can be large, which is preferable.

Note that the positive electrode active materials which are different from each other in particle size may be positive electrode active materials expressed by the same compositional formula, or may be positive electrode active materials expressed by different compositional formulas.

As described above, the filling density of the positive electrode active materials in the positive electrode material mixture layers 4B of the present embodiment is higher than that of conventional configurations. Accordingly, the porosity of the positive electrode material mixture layers 4B is lower than that of the conventional positive electrode material mixture layers, and is 20% or lower, for example. For this reason, the positive electrode material mixture layers 4B are harder than the conventional positive electrode material mixture layers. However, since the tensile extension $\varepsilon$ in the winding direction of the positive electrode 4 satisfies

$$\varepsilon \geq \eta/\rho \ \ldots \text{(Expression 7)},$$

the electrode group 8 can be fabricated without breaking the positive electrode 4 even when the porosity of the positive electrode material mixture layers 4B is 10% or lower.

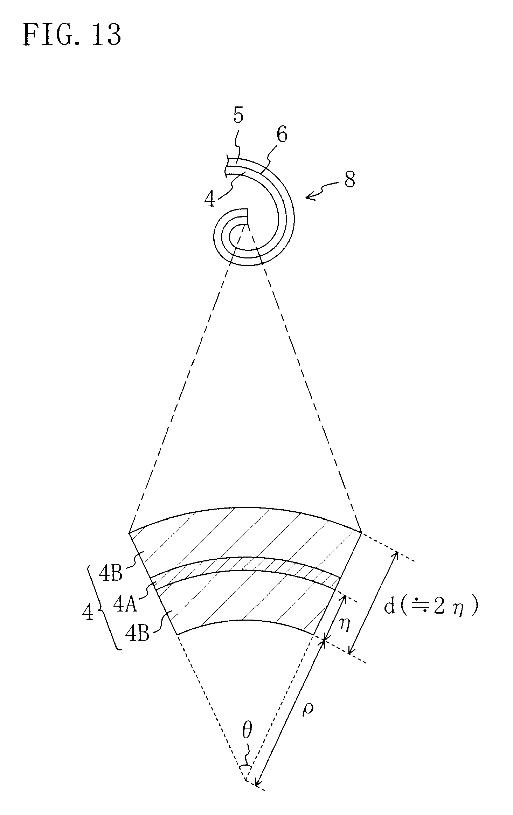

Here, $\eta$ in Expression 7 is a thickness of an inside positive electrode material mixture layer 4B, as shown in FIG. 13. In the case where the positive electrode material mixture layers 4B, 4B having the same thickness are formed on the surfaces of the positive electrode current collector 4A, $\eta$ can be set to 1/2 of the thickness d of the positive electrode 4 ($d \approx 2\eta$) because the thickness of the positive electrode current collector 4A is sufficiently thin relative to the thickness of the positive electrode material mixture layers 4B. In addition, $\rho$ in Expression 7 is a minimum radius of curvature of the positive electrode 4, as shown in FIG 13, and is a radius of curvature of a part of the inside positive electrode material mixture layer 4B forming the innermost surface of the electrode group 8. Note that FIG. 13 is a cross-sectional view with reference to which $\eta$ and $\rho$ in the present embodiment are described.

When such the positive electrode 4 is pulled in the winding direction, the positive electrode current collector 4A is extended while minute cracks 9 occur in the positive electrode material mixture layers 4B, as shown in FIG. 4(b). In this way, in the positive electrode 4, the positive electrode current collector 4A does not break at the same time when a first crack occurs in the positive electrode material mixture layers 4B, but even after the first crack occurs in the positive electrode material mixture layers 4B, the positive electrode current collector 4A continues to be extended for a while without being broken while cracks occur in the positive electrode material mixture layers 4B.

The positive electrode 4 in the present embodiment will be described below in comparison with the conventional positive electrode 44.

The porosity of the conventional positive electrode material mixture layers 44B is around 30%. Accordingly, as described with reference to FIGS. 2(a) and 3(a), the inside positive electrode material mixture layer 44B contracts in the thickness direction of the positive electrode 44 in winding. Therefore, even when the tensile extension in the winding direction of the positive electrode 44 does not satisfy Expression 7, an electrode group of wound type can be fabricated without breaking the positive electrode current collector 44A. Thus, an electrode group of wound type can be fabricated without breaking the positive electrode current collector 44A even if the positive electrode current collector 44A of the conventional positive electrode 44 extends in the winding direction not so much.

On the other hand, the porosity of the positive electrode material mixture layers 4B in the present embodiment is 20% or lower. Accordingly, as described with reference to FIGS. 2(b) and 3(b), the inside positive electrode material mixture layer 4B contracts little in the thickness direction of the positive electrode 4 in winding.

Assuming that the inside positive electrode material mixture layer 4B does not contract at all in the thickness direction of the positive electrode 4 by winding the positive electrode 4, the positive electrode current collector 4A would be broken at the innermost surface of the electrode group 8 unless the positive electrode current collector 4A extends longer by $\eta/\rho$ than the inside positive electrode material mixture layer 4B (according to Expression 3 and Expression 4). However, the tensile extension $\varepsilon$ of the positive electrode 4 in the present embodiment satisfies Expression 7, thereby enabling fabrication of the electrode group 8 without breaking the positive electrode current collector 4A. Consequently, the electrode group 8 can be fabricated without breaking the positive electrode current collector 4A even though the porosity of the positive electrode material mixture layers 4B is 20% or lower, is 15% or lower, or is even 10% or lower.

When $\eta$ and $\rho$ of current nonaqueous electrolyte secondary batteries are taken into consideration, the tensile extension $\varepsilon$ of the positive electrode 4 in the present embodiment may be 2% or higher, but is preferably 10% or lower. When the tensile extension in the winding direction of the positive electrode 4 exceeds 10%, the positive electrode 4 may be deformed in winding the positive electrode 4. Note that the tensile extension of the conventional positive electrode 44 is around 1.5%.

Further, when the tensile extension $\varepsilon$ in the winding direction of the positive electrode 4 is 3% or higher, in other words, when the positive electrode has a tensile extension $\varepsilon$ in its winding direction to the same extent as that of the negative electrode and that of the porous insulating layer (the tensile extensions of negative electrodes and porous insulating layers are 3% or higher in many cases), buckling of the electrode group and breakage of the electrode plates, which can be caused by expansion and contraction of the negative electrode active material accompanied by charge/discharge of the battery, can be prevented, besides the advantage that the electrode group 8 can be fabricated without breaking the positive electrode current collector 4A. In addition, an internal short circuit in the battery, which may be caused by crash, can be prevented.

The former advantage will be described in detail. When the tensile extension in the winding direction of the positive electrode is 3% or higher, the positive electrode and the negative electrode can have almost the same tensile extension in the winding direction. Accordingly, the positive electrode can expand and contract in the winding direction along with expansion and contraction of the negative electrode active material, thereby reducing a stress.

The latter advantage will be described next in detail. When the tensile extension in the winding direction of the positive electrode is 3% or higher, the positive electrode, the negative electrode, and the porous insulating layer can have almost the same tensile extension in the winding direction. This can prevent the positive electrode from being broken first and piercing the porous insulating layer even upon deformation by crash of the nonaqueous electrolyte secondary battery.

The above positive electrode 4 can be fabricated as follows. First, positive electrode material mixture slurry is prepared. The positive electrode material mixture slurry contains positive electrode active materials whose frequency distribution curve for particle sizes has two or more peaks. Here, of the particle sizes at the peaks, the minimum particle size ($r_{min}$) is preferably smaller than ore equal to 2/3 of the maximum particle size ($r_{max}$). Next, the positive electrode material mixture slurry is applied on both surfaces of a positive electrode current collector, and is then dried (process (a)). Thereafter, the positive electrode current collector having the surfaces on which the positive electrode active materials are provided is rolled (process (b)), and is then subjected to heat treatment at a temperature higher than the softening temperature of the positive electrode current collector (process (c)). In this way, a positive electrode active material $PA_L$ having a relatively large diameter is filled at a high density, forming pores S, which are filled with a positive electrode active material $PA_S$ having a relatively small diameter. Thus, it is possible to achieve a higher filling density of the positive electrode active materials in the positive electrode material mixture layers 4B than that in conventional configurations without using a higher pressure in rolling than that used in the conventional configurations.

As the temperature of the heat treatment after rolling is higher, or the time period of the heat treatment after rolling is longer, the tensile extension in the winding direction of the positive electrode 4 can be increased. Accordingly, the temperature and time period of the heat treatment after rolling may be set so that the tensile extension in the winding direction of the positive electrode 4 becomes a preferable value. However, excessively high temperature of the heat treatment after rolling may melt, and even dissolve the binder and the like contained in the positive electrode material mixture layers, thereby reducing the performance of the nonaqueous electrolyte secondary battery. Moreover, excessively longer time period of the heat treatment after rolling may cause the binder and the like melted in the heat treatment after rolling to cover the surface of the positive electrode active materials, thereby decreasing the battery capacity. In view of them, it is preferable that the temperature of the heat treatment after rolling is equal to or higher than the softening temperature of the positive electrode current collector and lower than the decomposition temperature of the binder contained in the positive electrode material mixture layers. Further, when a current collector of 8021 aluminum alloy containing iron of 1.4 weight % or more with respect to aluminum is used as the positive electrode current collector 4A, the temperature of the heat treatment can be set within a range equal to or higher than the softening temperature (e.g., 160°C) of the positive electrode current collector and lower than the melting temperature (e.g., 180°C) of the binder contained in the positive electrode material mixture layers. This can prevent the binder contained in the positive electrode material mixture layers from being melted in the heat treatment after rolling. In this case, the time period of the heat treatment after rolling may be one second or longer, and is preferably set in consideration of productivity of the nonaqueous electrolyte secondary battery. Alternatively, in the case where the current collector of 8021 aluminum alloy is used as the positive electrode current collector 4A, the time period of the heat treatment can be set to 0.1 seconds or longer and one minute or shorter if the temperature of the heat treatment is set equal to or higher than the softening temperature of the positive electrode current collector and lower than the decomposition temperature (e.g., 350°C) of the binder contained in the positive electrode material mixture layers.

The heat treatment after rolling may be heat treatment using hot air, IH (Induction Heating), infrared, or electric heat. Among all, it is preferable to select a method in which a hot roll heated to the predetermined temperature comes into contact with the rolled positive electrode current collector. Heat treatment using such a hot roll after rolling can reduce the time period of the heat treatment, and can limit energy loss to a minimum.

As described above, in the nonaqueous electrolyte secondary battery according to the present embodiment, since the filling density of the positive electrode active materials of the positive electrode material mixture layers 4B is higher than that of a conventional positive electrode active material, the battery capacity can be increased. Further, in the nonaqueous electrolyte secondary battery according to the present embodiment, since the tensile extension $\varepsilon$ in the winding direction of the positive electrode 4 satisfies Expression 7, it is possible to reduce breakage of the positive electrode current collector 4A in winding. Thus, a high-capacity nonaqueous electrolyte secondary battery can be fabricated at a high yield rate.

In the nonaqueous electrolyte secondary battery according to the present embodiment, the frequency distribution curve for the particle sizes of the positive electrode active materials has two or more peaks. Of the particle sizes at the peaks, the minimum particle size is smaller than or equal to 2/3 of the maximum particle size. When such the positive electrode active materials are employed in forming the positive electrode material mixture layers 4B, the positive electrode active material $PA_L$, having a relatively large diameter is arranged at a high density on the surfaces of the positive electrode current collector 4 in rolling, thereby forming pores S, which are filled with the positive electrode active material $PA_S$ having a relatively small diameter. Thus, without using a higher pressure in rolling in comparison to that of conventional configurations, the filling density of the positive electrode active materials of the positive electrode material mixture layers 4B can be higher than that of conventional configurations. Therefore, the amount of carbon dioxide adhering to the surfaces of the positive electrode active materials in rolling can be limited to a lower extent in comparison to the case of newly formed surfaces in rolling, so that it is possible to reduce the tendency for the positive electrode to be housed in the battery case with carbon dioxide or the like being adhered to the surfaces of the positive electrode active materials. In this way, carbon dioxide or the like can be prevented from being released from the positive electrode during charge/discharge under a high temperature or storage under a high temperature, which can prevent the expansion of the nonaqueous electrolyte secondary battery during charge/discharge under a high temperature or storage under a high temperature. Therefore, it is possible to safely charge a high-capacity nonaqueous electrolyte secondary battery.

The present inventors confirmed the advantages of the nonaqueous electrolyte secondary battery according to the present embodiment by using cylindrical batteries fabricated in accordance with the below mentioned methods. Although not described in detail, the present inventors also carried out a similar experiment on rectangular batteries including electrode groups of wound type for confirming the advantages of the nonaqueous electrolyte secondary battery according to the present embodiment.

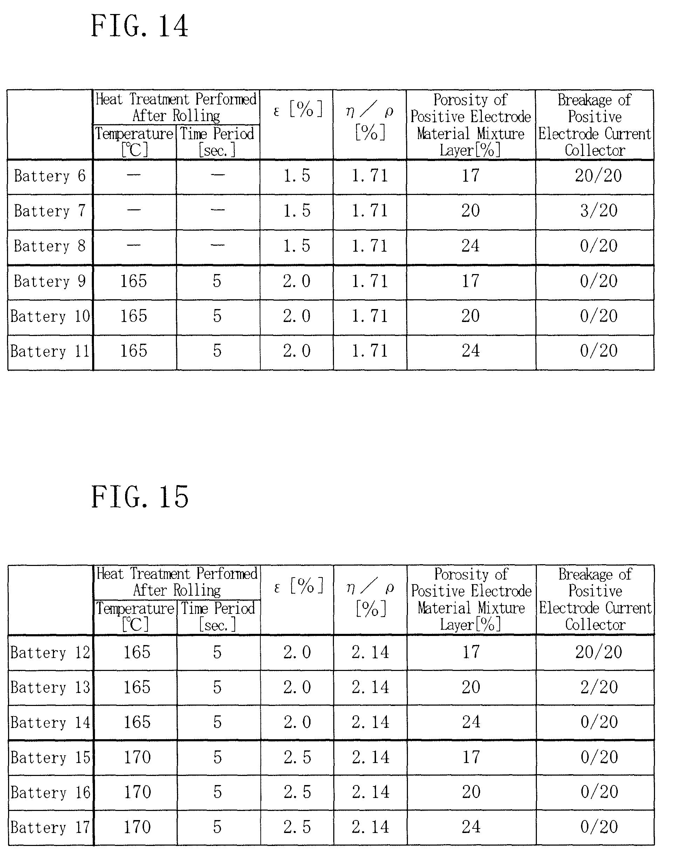

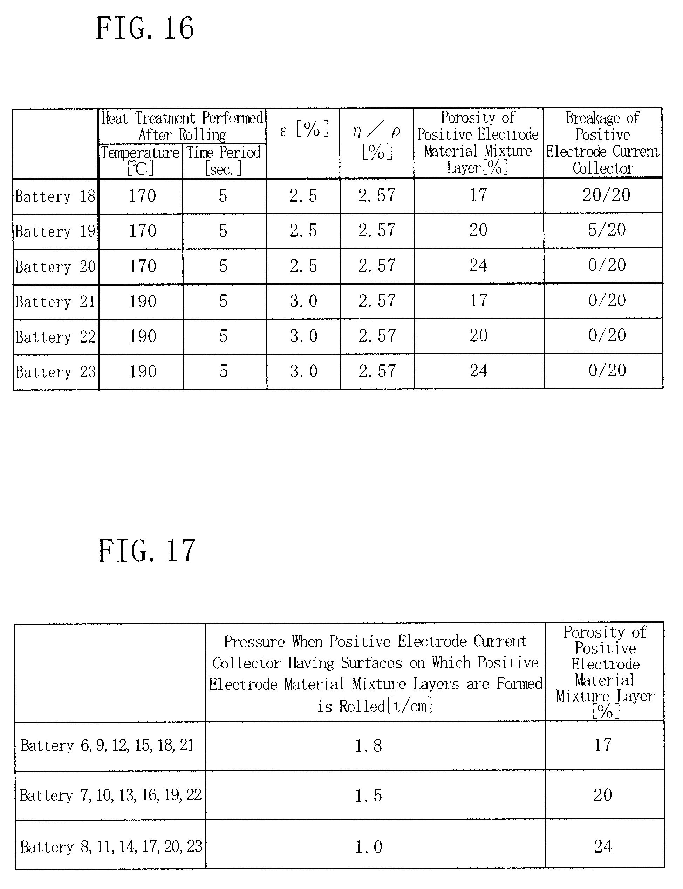

First, it was conformed that, when the tensile extension $\varepsilon$ in the winding direction of the positive electrode 4 satisfies Expression 7, the electrode group 8 can be fabricated without breaking the positive electrode current collector 4A. The experiment for and result of the confirmation will be described. FIGS. 14-16 are tables showing the results obtained by checking how easily positive electrode current collectors are broken with the tensile extension in the winding direction of the positive electrode varied. FIG. 14 shows the result where $\eta/\rho$ = 1.71 (%). FIG. 15 shows the result where $\eta/\rho$ = 2.14 (%). FIG. 16 shows the result where $\eta/\rho$ = 2.57 (%). FIG. 17 is a table showing a relationship between the pressure at rolling and the porosity of the positive electrode material mixture layers.

In currently available nonaqueous electrolyte secondary batteries, $2\eta$ is 0.12 mm, 0.15 mm, or 0.18 mm, and $\rho$ is 3.5 mm or larger. Accordingly, $\eta/\rho$ can be

$$\eta/\rho = (0.12/2)/3.5 \times 100 = 1.71 \ (\%),$$

$$\eta/\rho = (0.15/2)/3.5 \times 100 = 2.14 \ (\%),$$

and

$$\eta/\rho = (0.18/2)/3.5 \times 100 = 2.57 \ (\%)$$

In view of this, the present inventors fabricated Batteries 6-23 indicated in FIGS. 14-16, and checked whether or not the positive electrode current collectors were broken by viewing. Description will be given below to a method for fabricating Battery 9 as a typical example of methods for fabricating Batteries 6-23.

-Method for Fabricating Battery 9-

(Formation of Positive Electrode)

First, 4.5 vol% acetylene black (a conducive agent), a solution in which 4.7 vol% poly(vinylidene fluoride (PVDF) (a binder) is dissolved in a solvent of N-methylpyrrolidone (NMP), and 100 vol% $LiNi_{0.82}Co_{0.15}Al_{0.03}O_2$ having an average particle size of 10 $\mu$m (a positive electrode active material) were mixed, thereby obtaining positive electrode material mixture slurry.

Next, the positive electrode material mixture slurry was applied onto both surfaces of aluminum alloy foil, BESPA FS115 (A8021H-H18), produced by SUMIKEI ALUMINUM FOIL, Co., Ltd., having a thickness of 15 $\mu$m, and was then dried. Thereafter, a positive electrode current collector having the surfaces provided with the positive electrode active material was rolled by applying a pressure of 1.8 t/cm. By doing so, layers containing the positive electrode active material were formed on the surfaces of the positive electrode current collector. At this time point, the porosity of the layers was 17%, and the thickness of the electrode plate was 0.12 mm. Thereafter, the electrode plate came into contact with a hot roll (produced by TOKUDEN CO., LTD.) at 165°C for 5 seconds. Then, the electrode plate was cut to have a predetermined dimension, thereby obtaining a positive electrode.

(Formation of Negative Electrode)

First, flake artificial graphite was crashed and classified to have an average particle size of approximately 20 $\mu$m.

Next, one part by weight styrene-butadiene rubber (a binder) and 100 parts by weight aqueous solution containing 1 wt. % carboxymethyl cellulose were added to and mixed with 100 parts by weight of flake artificial graphite, thereby obtaining negative electrode material mixture slurry.

Subsequently, the negative electrode material mixture slurry was applied onto both surfaces of copper foil (a negative electrode current collector) having a thickness of 8 $\mu$m, and was then dried. Thereafter, the negative electrode current collector having the surfaces provided with the negative electrode active material was rolled, and was subjected to heat treatment at a temperature of 190°C for five hours. Then, it was cut to have a thickness of 0.210mm, a width of 58.5 mm, and a length of 510 mm, thereby obtaining a negative electrode.

(Preparation of Nonaqueous Electrolyte)

Three wt. % vinylene carbonate was added to a mixed solvent of ethylene carbonate, ethylmethyl carbonate, and dimethyl carbonate at a volume ratio of 1:1:8. To the resultant solution, $LiPF_6$ was dissolved at a concentration of 1.4 mol/m$^3$, thereby obtaining a nonaqueous electrolyte.

(Fabrication of Cylindrical Battery)

First, a positive electrode lead made of aluminum was attached to a part of the positive electrode current collector where the positive electrode material mixture layers are not formed, and a negative electrode lead made of nickel was attached to a part of the negative electrode current collector where the negative electrode material mixture layers are not formed. Then, the positive electrode and the negative electrode were disposed to face each other so that the positive electrode lead and the negative electrode lead extend in the opposite directions. Then, a separator (a porous insulating layer) made of polyethylene was placed between the positive electrode and the negative electrode. Next, the positive electrode and the negative electrode between which the separator is placed was wound to a core having a diameter of 3.5 mm with a load of 1.2 kg applied. Thus, a cylindrical electrode group of wound type was fabricated.

Next, an upper insulating plate was placed above the upper surface of the electrode group, and a lower insulating plate was placed below the lower surface of the electrode group. Then, the negative electrode lead was welded to a battery case, and the positive electrode lead was welded to a sealing plate. Next, the electrode group was housed in the battery case. Subsequently, the nonaqueous electrolyte was poured into the battery case under reduced pressure, and the sealing plate was calked to the opening part of the battery case through a gasket. Battery 9 was thus fabricated.

-Fabrication of Batteries other than Battery 9 (Batteries 6-8 and 10-23)-

Batteries 6-8 and 10-23 were fabricated in accordance with the method for fabricating Battery 9 except the fabrication of positive electrodes.

Regarding the heat treatment after rolling, the positive electrodes of Batteries 6-8 were not subjected to the heat treatment after rolling, while those of Batteries 10-23 were subjected to heat treatment at temperatures for time periods indicated in FIGS. 14-16 after rolling.

The pressures in rolling are as indicated in FIG. 17.

The results are shown in FIGS. 14-16. In "breakage of positive electrode current collector" in FIGS. 14-16, each numerator of the fractions is the total number of electrode groups, and the denominators of the fractions are the numbers of electrode groups in which the positive electrode current collectors were broken.

The results of Batteries 6, 7, 9, and 10 prove that when the porosity of the positive electrode material mixture layers is 20% or lower, the positive electrode current collector is broken in winding unless the tensile extension $\varepsilon$ in the winding direction of the positive electrode satisfies Expression 7.

The results of Batteries 12, 13, 15, and 16 and the results of Batteries 18, 19, 21, and 22 prove that when the porosity of the positive electrode material mixture layers is 20% or lower, the positive electrode current collector is broken in winding unless the tensile extension $\varepsilon$ in the winding direction of the positive electrode satisfies Expression 7. In addition, it can be seen that even when the tensile extension $\varepsilon$ in the winding direction of the positive electrode is larger than that of the conventional positive electrode ($\varepsilon > 1.5\%$), the positive electrode current collector is broken in winding unless the tensile extension in the winding direction of the positive electrode satisfies Expression 7.

The results of Batteries 8, 11, 14, 17, 20, and 23 prove that when the porosity of the positive electrode material mixture layers exceeds 20%, an electrode group of wound type can be fabricated without breaking the positive electrode current collector even if the tensile extension does not satisfy Expression 7 (i.e., even when $\varepsilon < \eta/\rho$).

Thus, it was confirmed that, as long as the tensile extension $\varepsilon$ in the winding direction of a positive electrode satisfies Expression 7, in other words, if the conditions (the temperature and the time period) of the heat treatment after rolling are set so that the tensile extension $\varepsilon$ in the winding direction of a positive electrode satisfies Expression 7, an electrode group can be fabricated without breaking a positive electrode current collector even with positive electrode material mixture layers having a porosity of 20% or lower.

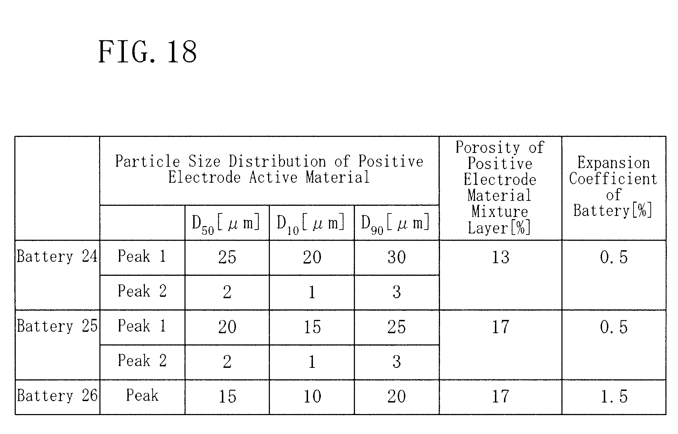

Next, it was confirmed that when positive electrode active materials whose frequency distribution curve for particle sizes has two or more peaks are employed in fabrication of positive electrodes, it is possible to reduce release of gas during storage under a high temperature. Details and results of an experiment carried out for the confirmation will be described. FIG. 18 is a table showing results obtained by examining whether or not the batteries expanded with the particle distribution of the positive electrode materials varied.

First, Batteries 24-26 indicated in FIG. 18 were fabricated in accordance with the method for fabricating Battery 16 indicated in FIG. 15 except that positive electrode materials having the particle size distribution shown in FIG 18 were used.

Here, to form positive electrode material mixture layers of Batteries 24 and 25, a positive electrode active material having a relatively large diameter and a positive electrode active material having a relatively small diameter were employed as positive electrode active materials. The particle size distribution of these positive electrode active materials was measured. The frequency distribution curve for the particle sizes of the positive electrode active materials of Battery 24 had two peaks. Of the particle sizes at these peaks, the maximum particle size ($D_{50}$ at peak 1) was 25 $\mu$m, and the minimum particle size ($D_{50}$ at peak 2) was 2 $\mu$m. The frequency distribution curve for the particle sizes of the positive electrode active materials of Battery 25 also had two peaks. Of the particle sizes at these peaks, the maximum particle size ($D_{50}$ at peak 1) was 20 $\mu$m, and the minimum particle size ($D_{50}$ at peak 2) was 2 $\mu$m.

In contrast, to form positive electrode material mixture layers of Battery 26, positive electrode active materials having almost the same particle size were used as positive electrode active materials. The particle size distribution of these positive electrode active materials was measured. The frequency distribution curve for the particle sizes of the positive electrode active materials of Battery 26 had only one peak. The particle size at the peak ($D_{50}$ at the peak) was 15 $\mu$m.

Note that the particle size distribution of the positive electrode active materials were measured using a particle size analyzer (produced by MICRO TRACK CO., LTD., product number MT3000II, using a laser diffraction scattering method as a measurement principle) with $LiNi_{0.82}Co_{0.15}Al_{0.03}O_2$ dispersed in water.

After the fabrication of Batteries 24-26, the expansion coefficients of Batteries 24-26 were measured. Here, for the expansion coefficients of Batteries 24-26, Batteries 24-26, which are in cylindrical form, were stored at 85°C for 3 days, and the rate of changes in outer diameter at the center of Batteries 24-26 before and after the storage was computed. The outer diameters at the center of Batteries 24-26 were measured using a laser displacement gauge, LS-7000 (produced by KEYENCE CORPORATION). The results are shown in FIG. 18.

From the results of Batteries 25 and 26, it can be seen that when the frequency distribution curve for the particle sizes of the positive electrode active materials has two peaks, and the difference between the minimum particle size and the maximum particle size of the particle sizes at the peaks is sufficiently large, the expansion of batteries during storage under a high temperature can be reduced.

Moreover, the present inventors measured the battery capacities of Batteries 24 and 25, and confirmed that the battery capacity is higher when the porosity of the positive electrode material mixture layers is lower.

As described above, it was confirmed that when the frequency distribution curve for the particle sizes of positive electrode active materials has two peaks, and of the particle sizes at the peaks, the minimum particle size is smaller than or equal to 2/3 of the maximum particle size, it is possible to prevent the formation of new surfaces of the positive electrode active materials during rolling, so that expansion of batteries during storage under a high temperature can be reduced.

Although details are omitted, the present inventors confirmed that when Batteries 24-26 are charged/discharged under a high temperature, the expansion of Batteries 24 and 25 can be limited to a lesser extent in comparison to Battery 26.

Moreover, the present inventors confirmed that when the frequency distribution curve for the particle sizes of the positive electrode active materials has three or more peaks, and the difference between the minimum particle size and the maximum particle size of the particle sizes at the peaks is sufficiently large, it is possible to reduce the expansion of batteries during charge/discharge under a high temperature or storage under a high temperature.

The materials for the positive electrode 4, the negative electrode 5, the porous insulating layer 6, and the nonaqueous electrolyte in the present embodiment are not limited to the aforementioned materials, and may be materials known as materials for positive electrodes, negative electrodes, porous insulating layers, and nonaqueous electrolytes of nonaqueous electrolyte secondary batteries, respectively. Respective typical materials will be listed below.

The positive electrode current collector 4A may be a base plate made of aluminum, stainless steel, titanium, or the like. The base plate may have a plurality of holes formed therein. In the case where the main material of the positive electrode current collector 4A is aluminum, it is preferable that the positive electrode current collector 4A contains iron of 1.2 wt. % or more and 1.7 wt. % or less with respect to the aluminum. This can increase, even when heat treatment after rolling is performed at a low temperature for a short time period, the tensile extension $\varepsilon$ in the winding direction of the positive electrode 4 when compared with the case where the positive electrode current collector is made of 1085 aluminum foil, IN30 aluminum foil, or 3003 aluminum foil. Accordingly, this can reduce covering of the positive electrode active material by the binder melted in the heat treatment after rolling, the binder being contained in the positive electrode material mixture layers 4B. Therefore, the battery capacity can be prevented from decreasing, besides the advantage that the electrode group 8 of wound type can be fabricated without breaking the positive electrode current collector 4A.

The positive electrode material mixture layers 4B may contain a binder, a conductive agent, and the like, in addition to the positive electrode active material. The positive electrode active material may be lithium composite metal oxide, for example. Typical examples of the materials include $LiCoO_2$, $LiNiO_2$, $LiMnO_2$, $LiCoNiO_2$, and the like. As the binder, PVDF, derivatives of PVDF, rubber-based binders (e.g., fluoro rubbers, acrylic rubbers, etc.), or the like may be used favorably. Examples of a material used as the conductive agent include graphites such as black lead, carbon blacks such as acetylene black, and the like.

It is preferable that the ratio of the volume that the binder occupies in the positive electrode material mixture layers 4B is 1% or higher and 6% or lower with respect to the volume that the positive electrode active material occupies in the positive electrode material mixture layers 4B. Thus, the area where the binder melted in the heat treatment after rolling covers the positive electrode active material can be limit to a minimum. This prevents a decrease in battery capacity in association with the heat treatment after rolling. In addition, since the ratio of the volume that the binder occupies in the positive electrode material mixture layers 4B with respect to the volume that the positive electrode active material occupies in the positive electrode material mixture layers 4B is 1% or higher, the positive electrode active material can be bonded to the positive electrode current collector.

The volume ratio of the conductive agent in the positive electrode material mixture layers 4B is as above, and the method for fabricating the positive electrode 4 is as above.

The negative electrode current collector 5A may be a base plate made of copper, stainless copper, nickel, or the like. A plurality of holes may be formed in the base plate.

The negative electrode material mixture layers 5B may contain a binder and the like in addition to the negative electrode active material. As the negative electrode active material, for example, carbon materials such as black lead and carbon fiber, or silicon compounds such as $SiO_x$ can be used.

The negative electrode 5 thus configured is formed in the following manner, for example. First, negative electrode material mixture slurry containing the negative electrode active material, a binder, and the like is prepared, is applied onto both surfaces of the negative electrode current collector 5A, and is then dried. Next, the negative electrode current collector having the surfaces provided with the negative electrode active material is rolled. After the rolling, heat treatment may be performed at a predetermined temperature for a predetermined time period.

The porous insulating layer 6 may be microporous thin films, woven fabric, nonwoven fabric, or the like having high ion permeability, predetermined mechanical strength, and predetermined insulating property. In particular, it is preferable that the porous insulating layer 6 is made of polyolefin such as polypropylene, polyethylene, etc. Polyolefin, which is excellent in durability and has a shutdown function, can increase safety of a nonaqueous electrolyte secondary battery. In the case where a microporous thin film is used as the porous insulating layer 6, the microporous thin film may be a single-layer film made of one kind of material, or a composite or multi-layer film made of two or more kinds of materials.

The nonaqueous electrolyte contains an electrolyte and a nonaqueous solvent in which the electrolyte is dissolved.

Any known nonaqueous solvents can be used as the nonaqueous solvent. Although the kinds of the nonaqueous solvent are not limited specifically, cyclic carbonate ester, chain carbonate ester, cyclic carboxylic ester, or the like may be used solely. Alternatively, a combination of two or more of them may be used.

The electrolyte may be any one or a combination of two or more of $LiClO_4$, $LiBF_4$, $LiPF_6$, $LiAlCl_4$, $LiSbF_6$, $LiSCN$, $LiCF_3SO_3$, $LiCF_3CO_2$, $LiAsF_6$, $LiB_{10}Cl_{10}$, low aliphatic lithium carboxylate, $LiCl$, $LiBr$, $LiI$, lithium chloroborane, borates, imide salts, and the like. The amount of the electrolyte dissolving in the nonaqueous solvent is preferably 0.5 mol/m$^3$ or more and 2 mol/m$^3$ or less.

Besides the electrolyte and the nonaqueous solvent, the nonaqueous electrolyte may contain an additive having the function of increasing charge/discharge efficiency of a battery in a manner that it decomposes on a negative electrode to form a film having high lithium ion conductivity on the negative electrode. As an additive having such a function, a single or a combination of two or more of vinylene carbonate (VC), vinyl ethylene carbonate (VEC), divinyl ethylene carbonate, and the like may be employed, for example.

Further, the nonaqueous electrolyte may contain, in addition to the electrolyte and the nonaqueous solvent, a known benzene derivative that inactivates a battery in a manner that it decomposes at overcharge to form a film on an electrode. Preferably, the benzene derivative having such a function has a phenyl group and a cyclic compound group adjacent to the phenyl group. The content ratio of the benzene derivative to the nonaqueous solvent is preferably 10 vol% or lower of the total amount of the nonaqueous solvent.

One example of methods for fabricating a nonaqueous electrolyte secondary battery may be the method described in the above section entitled "-Method for Fabricating Battery 9-."

The present invention has been described by referring to preferred embodiments, which do not serve as limitations, and various modifications are possible, of course. For example, the above embodiments describe a cylindrical lithium ion secondary battery as a nonaqueous electrolyte secondary battery, but can be applied to other nonaqueous electrolyte secondary batteries, such as rectangular lithium ion secondary batteries, nickel hydrogen storage batteries, and the like including electrode groups of wound type without deviating from the effective scope of the invention. The present invention can exhibit the advantages that breakage of the positive electrode current collector in winding in association with a reduction in porosity of the positive electrode material mixture layers can be prevented, and the expansion of the batteries during charge/discharge under a high temperature or storage under a high temperature can be reduced. In addition, when the tensile extension in the winding direction of the positive electrode is 3% or higher, the present invention can prevent buckling of the electrode group and breakage of the electrode plate caused by expansion and contraction of the negative electrode active material in association with charge/discharge of the battery. Additionally, the present invention can be utilized to prevent occurrence of an internal short circuit in a battery caused by crash.

INDUSTRIAL APPLICABILITY

As described above, the present invention is useful in nonaqueous electrolyte secondary batteries including electrode groups suitable for large current discharge, and can be utilized for, for example, drive batteries for electric tools and electric vehicles requiring high power output, large capacity batteries for backup power supply and for storage power supply.

DESCRIPTION OF REFERENCE CHARACTERS

| | |
|---|---|
| 1 | Battery Case |
| 2 | Sealing Plate |
| 3 | Gasket |
| 4 | Positive Electrode |
| 4A | Positive Electrode Current Collector |
| 4B | Positive Electrode Material Mixture Layer |
| 4a | Positive Electrode Lead |
| 5 | Negative Electrode |
| 5A | Negative Electrode Current Collector |
| 5B | Negative Electrode Material Mixture Layer |
| 5a | Negative Electrode Lead |
| 6 | Porous Insulating Layer |
| 8 | Electrode Group |
| 9 | Crack |
| 44 | Positive Electrode |

44A      Positive Electrode Current Collector
44B      Positive Electrode Material Mixture Layer
45        Inner Peripheral Surface
46        Inner Peripheral Surface
49        Crack
144      Positive Electrode
144A    Positive Electrode Current Collector
144B    Positive Electrode Material Mixture Layer
145      Inner Peripheral Surface
146      Inner Peripheral Surface

**Claims**

1. A nonaqueous electrolyte secondary battery comprising:

   an electrode group including a positive electrode in which a positive electrode material mixture layer having a positive electrode active material is provided on a positive electrode current collector, a negative electrode in which a negative electrode material mixture layer having a negative electrode active material is provided on a negative electrode current collector, and a porous insulating layer, where the positive electrode and the negative electrode are wound with the porous insulating layer interposed therebetween, wherein
   a frequency distribution curve for particle sizes of the positive electrode active material has two or more peaks, the positive electrode material mixture layer is provided on at least one of surfaces of the positive electrode current collector, the at least one surface being located inside in a radial direction of the electrode group,
   the positive electrode material mixture layer has a porosity of 20% or lower, and
   $\varepsilon \geq \eta/\rho$ is satisfied, where $\eta$ is a thickness of the positive electrode material mixture layer provided on the surface located inside in the radial direction of the electrode group of the surfaces of the positive electrode current collector, $\rho$ is a minimum radius of curvature of the positive electrode, and $\varepsilon$ is a tensile extension in a winding direction of the positive electrode.

2. The nonaqueous electrolyte secondary battery of claim 1, wherein
   of particle sizes at the peaks in the frequency distribution curve for the particle sizes of the positive electrode active material, a minimum particle size is smaller than or equal to 2/3 of a maximum particle size.

3. The nonaqueous electrolyte secondary battery of claim 2, wherein
   the minimum particle size is 0.1 $\mu$m or larger and 5 $\mu$m or smaller, and
   the maximum particle size is 10 $\mu$m or larger and 40 $\mu$m or smaller.

4. The nonaqueous electrolyte secondary battery of claim 1, wherein
   the positive electrode material mixture layer has a porosity of 15% or lower.

5. The nonaqueous electrolyte secondary battery of claim 4, wherein
   the positive electrode material mixture layer has a porosity of 10% or lower.

6. The nonaqueous electrolyte secondary battery of claim 1, wherein
   the minimum radius $\rho$ of curvature of the positive electrode is a radius of curvature of a part of the positive electrode material mixture layer, the part forming an innermost surface of the electrode group.

7. The nonaqueous electrolyte secondary battery of claim 1, wherein
   the tensile extension $\varepsilon$ in the winding direction of the positive electrode is equal to or higher than 2%.

8. The nonaqueous electrolyte secondary battery of claim 1, wherein
   the positive electrode is obtained by applying positive electrode material mixture slurry containing the positive electrode active material onto a surface of the positive electrode current collector, and then drying the applied slurry, and thereafter performing heat treatment after rolling on the positive electrode current collector having the surface provided with the positive electrode active material.

9. The nonaqueous electrolyte secondary battery of claim 8, wherein

the positive electrode current collector is made of aluminum containing iron.

10. A method for fabricating the nonaqueous electrolyte secondary battery of claim 1, the method comprising, for forming the positive electrode:

(a) applying positive electrode material mixture slurry containing the positive electrode active material onto a surface of the positive electrode current collector, and then drying the applied slurry;
(b) rolling the positive electrode current collector having the surface provided with the positive electrode active material; and
(c) performing, after (b), heat treatment on the rolled positive electrode current collector at a temperature equal to or higher than a softening temperature of the positive electrode current collector.

# FIG. 1

| Porosity of Positive Electrode Material Mixture Layer[%] | (The Number of Electrode Groups in which Positive Electrode Current Collectors are Broken) / (Total Number of Electrode Groups) | |
|---|---|---|
| | Inside in Radial Direction of Electrode Group | Outside in Radial Direction of Electrode Group |
| 30 | 0/20 | 0/20 |
| 20 | 3/20 | 0/20 |

FIG. 2

(a)

(b)

FIG. 3

(a)

(b)

FIG. 4

(a)

(b)

# FIG. 5

| | Heat Treatment on Positive Electrode after Rolling | | Tensile Extension of Positive Electrode After Rolling [%] |
|---|---|---|---|
| | Temperature of Heat Treatment [℃] | Time Period of Heat Treatment [sec.] | |
| Battery 1 | | 10 | 3.0 |
| Battery 2 | | 20 | 5.0 |
| Battery 3 | 280 | 120 | 6.0 |
| Battery 4 | | 180 | 6.5 |
| Battery 5 | – | – | 1.5 |

# FIG. 6

| Porosity of Positive Electrode Material Mixture Layer [%] | Expansion Coefficient of Battery [%] |
|---|---|
| 30 | 0.5 |
| 20 | 1.1 |

FIG. 7

FIG. 8

FIG. 9

FIG. 10

FIG. 11

(a)

(b)

(c)

PA

44A

PA

44A

PA'

44A

FIG. 12

(a)

(b)

$PA_L$   $PA_S$

4A

$PA_L$   $PA_S$

S   4A   S

FIG. 13

# FIG. 14

| | Heat Treatment Performed After Rolling | | ε [%] | η／ρ [%] | Porosity of Positive Electrode Material Mixture Layer[%] | Breakage of Positive Electrode Current Collector |
|---|---|---|---|---|---|---|
| | Temperature [°C] | Time Period [sec.] | | | | |
| Battery 6 | — | — | 1.5 | 1.71 | 17 | 20/20 |
| Battery 7 | — | — | 1.5 | 1.71 | 20 | 3/20 |
| Battery 8 | — | — | 1.5 | 1.71 | 24 | 0/20 |
| Battery 9 | 165 | 5 | 2.0 | 1.71 | 17 | 0/20 |
| Battery 10 | 165 | 5 | 2.0 | 1.71 | 20 | 0/20 |
| Battery 11 | 165 | 5 | 2.0 | 1.71 | 24 | 0/20 |

# FIG. 15

| | Heat Treatment Performed After Rolling | | ε [%] | η／ρ [%] | Porosity of Positive Electrode Material Mixture Layer[%] | Breakage of Positive Electrode Current Collector |
|---|---|---|---|---|---|---|
| | Temperature [°C] | Time Period [sec.] | | | | |
| Battery 12 | 165 | 5 | 2.0 | 2.14 | 17 | 20/20 |
| Battery 13 | 165 | 5 | 2.0 | 2.14 | 20 | 2/20 |
| Battery 14 | 165 | 5 | 2.0 | 2.14 | 24 | 0/20 |
| Battery 15 | 170 | 5 | 2.5 | 2.14 | 17 | 0/20 |
| Battery 16 | 170 | 5 | 2.5 | 2.14 | 20 | 0/20 |
| Battery 17 | 170 | 5 | 2.5 | 2.14 | 24 | 0/20 |

# FIG. 16

| | Heat Treatment Performed After Rolling | | ε [%] | η／ρ [%] | Porosity of Positive Electrode Material Mixture Layer[%] | Breakage of Positive Electrode Current Collector |
|---|---|---|---|---|---|---|
| | Temperature [°C] | Time Period [sec.] | | | | |
| Battery 18 | 170 | 5 | 2.5 | 2.57 | 17 | 20/20 |
| Battery 19 | 170 | 5 | 2.5 | 2.57 | 20 | 5/20 |
| Battery 20 | 170 | 5 | 2.5 | 2.57 | 24 | 0/20 |
| Battery 21 | 190 | 5 | 3.0 | 2.57 | 17 | 0/20 |
| Battery 22 | 190 | 5 | 3.0 | 2.57 | 20 | 0/20 |
| Battery 23 | 190 | 5 | 3.0 | 2.57 | 24 | 0/20 |

# FIG. 17

| | Pressure When Positive Electrode Current Collector Having Surfaces on Which Positive Electrode Material Mixture Layers are Formed is Rolled[t/cm] | Porosity of Positive Electrode Material Mixture Layer [%] |
|---|---|---|
| Battery 6, 9, 12, 15, 18, 21 | 1.8 | 17 |
| Battery 7, 10, 13, 16, 19, 22 | 1.5 | 20 |
| Battery 8, 11, 14, 17, 20, 23 | 1.0 | 24 |

# FIG. 18

| | | Particle Size Distribution of Positive Electrode Active Material | | | Porosity of Positive Electrode Material Mixture Layer[%] | Expansion Coefficient of Battery[%] |
|---|---|---|---|---|---|---|
| | | $D_{50}[\mu m]$ | $D_{10}[\mu m]$ | $D_{90}[\mu m]$ | | |
| Battery 24 | Peak 1 | 25 | 20 | 30 | 13 | 0.5 |
| | Peak 2 | 2 | 1 | 3 | | |
| Battery 25 | Peak 1 | 20 | 15 | 25 | 17 | 0.5 |
| | Peak 2 | 2 | 1 | 3 | | |
| Battery 26 | Peak | 15 | 10 | 20 | 17 | 1.5 |

**INTERNATIONAL SEARCH REPORT**

| International application No. |
|---|
| PCT/JP2009/002467 |

A.   CLASSIFICATION OF SUBJECT MATTER
*H01M4/02*(2006.01)i, *H01M4/66*(2006.01)i, *H01M10/40*(2006.01)i

According to International Patent Classification (IPC) or to both national classification and IPC

B.   FIELDS SEARCHED

Minimum documentation searched (classification system followed by classification symbols)
H01M4/02, H01M4/66, H01M10/40

Documentation searched other than minimum documentation to the extent that such documents are included in the fields searched
Jitsuyo Shinan Koho          1922-1996   Jitsuyo Shinan Toroku Koho   1996-2009
Kokai Jitsuyo Shinan Koho    1971-2009   Toroku Jitsuyo Shinan Koho   1994-2009

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| A | JP 2008-186704 A  (Matsushita Electric Industrial Co., Ltd.), 14 August, 2008 (14.08.08), Claim 1 (Family: none) | 1-10 |
| A | JP 2006-134762 A  (Sony Corp.), 25 May, 2006 (25.05.06), Claim 1 (Family: none) | 1-10 |
| A | JP 2000-82466 A  (The Nippon Chemical Industrial Co., Ltd.), 21 March, 2000 (21.03.00), Claim 1 & JP 2006-318926 A | 1-10 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 August, 2009 (06.08.09) | 18 August, 2009 (18.08.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2009/002467

C (Continuation). DOCUMENTS CONSIDERED TO BE RELEVANT

| Category* | Citation of document, with indication, where appropriate, of the relevant passages | Relevant to claim No. |
|---|---|---|
| A | JP 9-306546 A (Shin-Kobe Electric Machinery Co., Ltd.),<br>28 November, 1997 (28.11.97),<br>Claim 1<br>(Family: none) | 1-10 |
| A | JP 2002-93417 A (Mitsubishi Cable Industries, Ltd.),<br>29 March, 2002 (29.03.02),<br>Claim 1<br>(Family: none) | 1-10 |
| A | JP 2003-51311 A (Mitsubishi Chemical Corp.),<br>21 February, 2003 (21.02.03),<br>Claim 1<br>(Family: none) | 1-10 |
| A | JP 2004-119218 A (Seimi Chemical Co., Ltd.),<br>15 April, 2004 (15.04.04),<br>Claim 1<br>& US 2006/263690 A1   & WO 2004/30125 A1<br>& KR 10-2005/30899 A   & CN 1685542 A | 1-10 |
| P,A | WO 2009/19861 A1 (Panasonic Corp.),<br>12 February, 2009 (12.02.09),<br>Full text<br>& JP 2009/64770 A | 1-10 |

Form PCT/ISA/210 (continuation of second sheet) (April 2007)

**EP 2 393 147 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H05182692 B
- JP 2007323217 A
- JP 2008002114 W